# EUROPEAN PATENT APPLICATION

(11) **EP 3 001 692 A1**
(43) Date of publication of application: **30.03.2016**
(21) Application number: 13888660.1
(22) Date of filing: 02.07.2013
(51) Int. Cl.: H04N 21/458

(54) **STREAMING MEDIA PROCESSING METHOD, APPARATUS AND SYSTEM**

(71) Applicant: Huawei Technologies Co., Ltd., Longgang District Shenzhen, Guangdong 518129 (CN)
(72) Inventor: WEI, Anni, Shenzhen Guangdong 518129 (CN); LI, Zhiming, Shenzhen Guangdong 518129 (CN)
(74) Representative: Epping - Hermann - Fischer
(86) International application number: PCT/CN2013/078693
(87) International publication number: WO 2015/000137

(57) **Abstract**

Embodiments of the present invention disclose a streaming media processing method, comprising: acquiring, by a proxy server, control information and a first attribute file of requested streaming media according to a streaming media request of a terminal; modifying, by the proxy server, the first attribute file according to the control information to generate a second attribute file of new streaming media; and returning, by the proxy server, the second attribute file to the terminal, and controlling, according to the second attribute file, the terminal to play the new streaming media. The present invention further discloses an apparatus and a system. The present invention can provide an advertisement value-added service for an HTTP service operator, ensure that a user smoothly browses streaming media, and provide a user-friendly advertisement service for the user.

## Description

### TECHNICAL FIELD

The present invention relates to the field of communications technologies, and in particular, to a streaming media processing method, apparatus, and system.

### BACKGROUND

At present, to acquire real-time multimedia content with a terminal, a user mostly uses the Hyper Text Transfer Protocol (Hyper Text Transfer Protoco, HTTP) to transmit real-time streaming media such as an audio stream, a video stream, and a caption stream.

At present, a procedure for processing the HTTP streaming media that is specified by the 3GPP is as follows: segmenting video content and encapsulating the video content into video content segments of a required format; generating media presentation descriptions (Media Presentation Description, MPD) according to the video content segments; and then publishing the video content and the MPDs to an HTTP streaming server. When a terminal receives a video playback request from a user, the terminal requests the HTTP streaming server to receive the MPDs, generates video content segment link information according to the received MPDs, and requests the video content segments from the HTTP server.

Based on the current HTTP processing architecture, an operator cannot control the HTTP service or make the HTTP service provide a value-added service for the operator.

### SUMMARY

Embodiments of the present invention provide a streaming media processing method, apparatus, and system, which can provide an advertisement value-added service for an HTTP service operator, ensure that a user smoothly browses streaming media, and provide a user-friendly advertisement service for the user.

To solve the foregoing technical problem, a first aspect of the present invention provides a streaming media control method, including:
acquiring, by a proxy server, control information and a first attribute file of requested streaming media according to a streaming media request of a terminal;
modifying, by the proxy server, the first attribute file according to the control information to generate a second attribute file of new streaming media; and
returning, by the proxy server, the second attribute file to the terminal, and controlling, according to the second attribute file, the terminal to play the new streaming media.

With reference to the first aspect, in a first possible implementation manner, the acquiring, by a proxy server, control information and a first attribute file of requested streaming media according to a streaming media request of a terminal includes:
forwarding, by the proxy server to the streaming server, the received streaming media request of the terminal;
receiving, by the proxy server, the first attribute file that is returned according to the streaming media request by the streaming server; and
acquiring, by the proxy server, the control information of the requested streaming media according to the received streaming media request of the terminal, where the control information includes interstitial position control information.

With reference to the first aspect or the first possible implementation manner of the first aspect, in a second possible implementation manner, after the acquiring, by a proxy server, control information and a first attribute file of requested streaming media according to a streaming media request of a terminal, and before the modifying, by the proxy server, the first attribute file according to the control information to generate a second attribute file of new streaming media, the method includes:
acquiring, by the proxy server, network status information according to the control information, where the network status information includes a size of data transmission bandwidth;
determining, by the proxy server according to the size of data transmission bandwidth, whether the size of data transmission bandwidth is greater than or equal to a preset threshold; and
when the data transmission bandwidth of the proxy server is greater than or equal to the preset threshold, performing the step of modifying, by the proxy server, the first attribute file according to the control information to generate a second attribute file of new streaming media.

With reference to any one of the first aspect to the second possible implementation manner of the first aspect, in a third possible implementation manner, the modifying, by the proxy server, the first attribute file according to the control information to generate a second attribute file of new streaming media includes:
sending, by the proxy server, an advertisement information request to an advertisement server according to the control information;
receiving, by the proxy server, advertisement description information that is returned according to the advertisement information request by the advertisement server; and
adding, by the proxy server, the advertisement description information to the first attribute file to generate the second attribute file of the new streaming media.

With reference to any one of the first aspect to the second possible implementation manner of the first aspect, in a fourth possible implementation manner, the modifying, by the proxy server, the first attribute file according to the control information to generate a second attribute file of new streaming media includes:
acquiring, by the proxy server, advertisement server information according to the control information; and
adding, by the proxy server, the advertisement server information to the first attribute file to generate the second attribute file of the new streaming media.

With reference to any one of the first aspect to the third possible implementation manner of the first aspect, in a fifth possible implementation manner, the adding, by the proxy server, the advertisement description information to the first attribute file to generate the second attribute file includes:
determining, by the proxy server according to the interstitial position control information of the control information, whether an insertion position of the advertisement description information is located within a playback period corresponding to the requested streaming media; and
if a determining result is no, delaying, by the proxy server according to an insertion position of advertisement streaming media and a playback period corresponding to the advertisement streaming media, the playback period corresponding to the streaming media, and adding the advertisement description information to the first attribute file to obtain the second attribute file; or
if a determining result is yes, adding, by the proxy server, the advertisement description information to the first attribute file to obtain the second attribute file.

With reference to any one of the first aspect to the fifth possible implementation manner of the first aspect, in a sixth possible implementation manner, the returning, by the proxy server, the second attribute file to the terminal, and controlling, according to the second attribute file, the terminal to play the new streaming media includes:
returning, by the proxy server, the second attribute file to the terminal;
receiving, by the proxy server, a playback request that is generated according to the second attribute file by the terminal, where the playback request carries at least one identifier of the requested new streaming media;
forwarding, by the proxy server according to the at least one identifier, carried in the playback request, of the requested new streaming media, the playback request to a server corresponding to the playback request;
receiving, by the proxy server, the new streaming media that is returned according to the playback request by the corresponding server; and
pushing, by the proxy server, the new streaming media to the terminal, so that the terminal plays the new streaming media.

With reference to the sixth possible implementation manner of the first aspect, in a seventh possible implementation manner, that the playback request carries at least one identifier of the requested new streaming media includes that:
the identifier, carried in the playback request, of the requested new streaming media includes an identifier of the requested advertisement streaming media and an identifier of the requested streaming media, where
when the insertion position of the advertisement streaming media is not located within the playback period corresponding to the requested streaming media, the playback request corresponding to the advertisement streaming media carries the identifier of the advertisement streaming media; and
when the insertion position of the advertisement streaming media is located within the playback period corresponding to the requested streaming media, the playback request corresponding to the advertisement streaming media carries both the identifier of the requested advertisement streaming media and the identifier of the requested streaming media.

With reference to any one of the first aspect to the seventh possible implementation manner of the first aspect, in an eighth possible implementation manner, the forwarding, by the proxy server according to the playback request, the playback request to a server corresponding to the playback request includes:
determining a type of a requested video according to the identifier, carried in the playback request, of the requested new streaming media; and
if the type of the video requested by using the playback request is advertisement streaming media, forwarding, by the proxy server, the playback request to the advertisement server;
if the type of the video requested by using the playback request is streaming media, forwarding, by the proxy server, the playback request to the streaming server; or
if the type of the video requested by using the playback request is streaming media and advertisement streaming media, forwarding, by the proxy server, the playback request to an encoder, so that the encoder acquires the advertisement streaming media and the streaming media that are requested by using the playback request, and performs coding synthesis processing on the advertisement streaming media and the streaming media to obtain a synthesized video file.

A second aspect of the present invention provides a streaming media processing method, including:
receiving, by an advertisement server, an advertisement information request sent by a proxy server, and generating advertisement description information according to the advertisement information request; and
returning, by the advertisement server, the advertisement description information to the proxy server.

With reference to the second aspect, in a first possible implementation manner, the generating, by an advertisement server, advertisement description information according to the advertisement information request includes:
searching, by the advertisement server according to the advertisement information request, a pre-configured advertisement streaming media library for advertisement streaming media corresponding to the advertisement information request; and
generating, by the advertisement server, advertisement description information according to the corresponding advertisement streaming media.

With reference to the second aspect or the first possible implementation manner of the second aspect, in a second possible implementation manner, the method further includes:
when the advertisement server receives a playback request sent by the proxy server, acquiring, by the advertisement server according to the playback request, advertisement streaming media corresponding to the playback request; and
returning, by the advertisement server, the advertisement streaming media to the proxy server.

With reference to the second aspect or the first possible implementation manner of the second aspect, in a third possible implementation manner, the advertisement server the method further includes:
when the advertisement server receives a playback request sent by a terminal, acquiring, by the advertisement server according to the playback request, advertisement streaming media corresponding to the playback request; and
returning, by the advertisement server, the advertisement streaming media to the terminal.

A third aspect of the present invention provides a proxy server, including:
a first acquiring module, configured to acquire control information and a first attribute file of requested streaming media according to a streaming media request of a terminal;
a modification module, configured to modify the first attribute file according to the control information to generate a second attribute file of new streaming media; and
a control module, configured to return the second attribute file to the terminal, and control, according to the second attribute file, the terminal to play the new streaming media.

With reference to the third aspect, in a first possible implementation manner, the acquiring module includes:
a first forwarding unit, configured to receive the streaming media request of the terminal, and forward the streaming media request to the streaming server;
a first receiving unit, configured to receive the first attribute file that is returned according to the streaming media request by the streaming server; and
an acquiring unit, configured to acquire the control information of the requested streaming media according to the received streaming media request of the terminal, where the control information includes interstitial position control information.

With reference to the third aspect or the first possible implementation manner of the third aspect, in a second possible implementation manner, the proxy server further includes:
a second acquiring module, configured to acquire network status information according to the control information, where the network status information includes a size of data transmission bandwidth; and
a determining module, configured to determine, according to the size of data transmission bandwidth, whether the size of data transmission bandwidth is greater than or equal to a preset threshold; and when a determining result of the determining module is yes, notify, by the determining module, the modification module to modify the first attribute file according to the control information to generate the second attribute file of the new streaming media.

With reference to any one of the third aspect to the second possible implementation manner of the third aspect, in a third possible implementation manner, the modification module includes:
a sending unit, configured to send an advertisement information request to an advertisement server according to the control information;
a second receiving unit, configured to receive advertisement description information that is returned according to the advertisement information request by the advertisement server; and
a first adding unit, configured to add the advertisement description information to the first attribute file to generate the second attribute file of the new streaming media.

With reference to any one of the third aspect to the second possible implementation manner of the third aspect, in a fourth possible implementation manner, the modification module further includes:
a first acquiring unit, configured to acquire advertisement server information according to the control information; and
a second adding unit, configured to add the advertisement server information to the first attribute file to generate the second attribute file of the new streaming media.

With reference to any one of the third aspect to the third possible implementation manner of the third aspect, in a fifth possible implementation manner, the first adding unit includes:
a first determining subunit, configured to determine, according to the interstitial position control information of the control information, whether an insertion position of the advertisement description information is located within a playback period corresponding to the requested streaming media;
a delay subunit, configured to: if a determining result of the first determining unit is no, delay, according to an insertion position of advertisement streaming media and a playback period corresponding to the advertisement streaming media, the playback period corresponding to the streaming media, and add the advertisement description information to the first attribute file to obtain the second attribute file; and
a first adding subunit, configured to add the advertisement description information to the first attribute file to obtain the second attribute file.

With reference to any one of the third aspect to the second possible implementation manner of the third aspect, in a sixth possible implementation manner, the control module includes:
a first returning unit, configured to return the second attribute file to the terminal;
a third receiving unit, configured to receive a playback request that is generated according to the second attribute file by the terminal, where the playback request carries at least one identifier of the requested new streaming media;
a second forwarding unit, configured to forward, according to the at least one identifier, carried in the playback request, of the requested new streaming media, the playback request to a server corresponding to the playback request;
a fourth receiving unit, configured to receive the new streaming media that is returned according to the playback request by the corresponding server; and
a pushing unit, configured to push the new streaming media to the terminal, so that the terminal plays the new streaming media.

With reference to the sixth possible implementation manner of the third aspect, in a seventh possible implementation manner, that the playback request carries at least one identifier of the requested new streaming media includes that:
the identifier, carried in the playback request, of the requested new streaming media includes an identifier of the requested advertisement streaming media and an identifier of the requested streaming media, where
when the insertion position of the advertisement streaming media is not located within the playback period corresponding to the requested streaming media, the playback request corresponding to the advertisement streaming media carries the identifier of the advertisement streaming media; and
when the insertion position of the advertisement streaming media is located within the playback period corresponding to the requested streaming media, the playback request corresponding to the advertisement streaming media carries both the identifier of the requested advertisement streaming media and the identifier of the requested streaming media.

With reference to any one of the third aspect to the seventh possible implementation manner of the third aspect, in an eighth possible implementation manner, the second forwarding unit includes:
a second determining subunit, configured to determine a type of a requested video according to the identifier, carried in the playback request, of the requested new streaming media;
a first forwarding subunit, configured to: when the second determining subunit determines that the type of the video requested by using the playback request is advertisement streaming media, forward the playback request to the advertisement server;
a second forwarding subunit, configured to: when the second determining subunit determines that the type of the video requested by using the playback request is streaming media, forward the playback request to the streaming server; and
a third forwarding subunit, configured to: if the type of the video requested by using the playback request is streaming media and advertisement streaming media, forward the playback request to an encoder, so that the encoder acquires the advertisement streaming media and the streaming media that are requested by using the playback request, and performs coding synthesis processing on the advertisement streaming media and the streaming media to obtain a synthesized video file.

A fourth aspect of the present invention provides a proxy server, including:
a generation module, configured to receive an advertisement information request sent by a proxy server, and generate advertisement description information according to the advertisement information request; and
a first returning module, configured to return the advertisement description information to the proxy server.

With reference to the fourth aspect, in a first possible implementation manner, the generation module includes:
a search unit, configured to search, according to the advertisement information request, a pre-configured advertisement streaming media library for advertisement streaming media corresponding to the advertisement information request; and
a generation unit, configured to generate advertisement description information according to the corresponding advertisement streaming media.

With reference to the fourth aspect or the first possible implementation manner of the fourth aspect, in a second possible implementation manner, the proxy server further includes:
a first acquiring module, configured to: when the advertisement server receives a playback request sent by the proxy server, acquire, according to the playback request, advertisement streaming media corresponding to the playback request; and
a second returning module, configured to return the advertisement streaming media to the proxy server.

With reference to the fourth aspect or the first possible implementation manner of the fourth aspect, in a third possible implementation manner, the proxy server further includes:
a second acquiring module, configured to: when the advertisement server receives a playback request sent by a terminal, acquire, according to the playback request, advertisement streaming media corresponding to the playback request; and
a third returning module, configured to return the advertisement streaming media to the terminal.

A fifth aspect of the present invention further provides a system, including the proxy server provided in the third aspect and the advertisement server provided in the fourth aspect.

A sixth aspect of the present invention provides a computer storage medium, including:
the computer storage medium stores a program, and when the program is executed, some or all steps of the streaming media processing method in the foregoing invention summary are performed.

A seventh aspect of the present invention provides a proxy server, including a first processor, where
the first processor performs the following steps:
acquiring control information and a first attribute file of requested streaming media according to a streaming media request of a terminal;
modifying the first attribute file according to the control information to generate a second attribute file of new streaming media; and
returning the second attribute file to the terminal, and controlling, according to the second attribute file, the terminal to play the new streaming media.

With reference to the seventh aspect, in a first possible implementation manner, the acquiring control information and a first attribute file of requested streaming media according to a streaming media request of a terminal includes:
forwarding, to the streaming server, the received streaming media request of the terminal;
receiving the first attribute file that is returned according to the streaming media request by the streaming server; and
acquiring the control information of the requested streaming media according to the received streaming media request of the terminal, where the control information includes interstitial position control information.

With reference to the seventh aspect or the first possible implementation manner of the seventh aspect, in a second possible implementation manner,
after the acquiring, by the first processor, control information and a first attribute file of requested streaming media according to a streaming media request of a terminal, and before the modifying, by the first processor, the first attribute file according to the control information to generate a second attribute file of new streaming media, the processor further performs the following steps:
acquiring network status information according to the control information, where the network status information includes a size of data transmission bandwidth;
determining, according to the size of data transmission bandwidth, whether the size of data transmission bandwidth is greater than or equal to a preset threshold; and
when the data transmission bandwidth is greater than or equal to the preset threshold, performing the step of modifying, by the proxy server, the first attribute file according to the control information to generate a second attribute file of new streaming media.

With reference to any one of the seventh aspect to the second possible implementation manner of the seventh aspect, in a third possible implementation manner, the modifying, by the first processor, the first attribute file according to the control information to generate a second attribute file of new streaming media includes:
sending an advertisement information request to an advertisement server according to the control information;
receiving advertisement description information that is returned according to the advertisement information request by the advertisement server; and
adding the advertisement description information to the first attribute file to generate the second attribute file of the new streaming media.

With reference to any one of the seventh aspect to the second possible implementation manner of the seventh aspect, in a fourth possible implementation manner, the modifying, by the first processor, the first attribute file according to the control information to generate a second attribute file of new streaming media includes:
acquiring advertisement server information according to the control information; and
adding the advertisement server information to the first attribute file to generate the second attribute file of the new streaming media.

With reference to any one of the seventh aspect to the third possible implementation manner of the seventh aspect, in a fifth possible implementation manner, the adding, by the first processor, the advertisement description information to the first attribute file to generate the second attribute file includes:
determining, according to the interstitial position control information of the control information, whether an insertion position of the advertisement description information is located within a playback period corresponding to the requested streaming media; and
if a determining result is no, delaying, according to an insertion position of advertisement streaming media and a playback period corresponding to the advertisement streaming media, the playback period corresponding to the streaming media, and adding the advertisement description information to the first attribute file to obtain the second attribute file; or
if a determining result is yes, adding the advertisement description information to the first attribute file to obtain the second attribute file.

With reference to any one of the seventh aspect to the fifth possible implementation manner of the seventh aspect, in a sixth possible implementation manner, the returning, by the first processor, the second attribute file to the terminal, and controlling, according to the second attribute file, the terminal to play the new streaming media includes:
returning the second attribute file to the terminal;
receiving a playback request that is generated according to the second attribute file by the terminal, where the playback request carries at least one identifier of the requested new streaming media;
forwarding, according to the at least one identifier, carried in the playback request, of the requested new streaming media, the playback request to a server corresponding to the playback request;
receiving the new streaming media that is returned according to the playback request by the corresponding server; and
pushing the new streaming media to the terminal, so that the terminal plays the new streaming media.

With reference to the sixth possible implementation manner of the seventh aspect, in a seventh possible implementation manner, that the playback request carries at least one identifier of the requested new streaming media includes that:
the identifier, carried in the playback request, of the requested new streaming media includes an identifier of the requested advertisement streaming media and an identifier of the requested streaming media, where
when the insertion position of the advertisement streaming media is not located within the playback period corresponding to the requested streaming media, the playback request corresponding to the advertisement streaming media carries the identifier of the advertisement streaming media; and
when the insertion position of the advertisement streaming media is located within the playback period corresponding to the requested streaming media, the playback request corresponding to the advertisement streaming media carries both the identifier of the requested advertisement streaming media and the identifier of the requested streaming media.

With reference to any one of the seventh aspect to the seventh possible implementation manner of the seventh aspect, in an eighth possible implementation manner, the forwarding, according to the playback request, the playback request to a server corresponding to the playback request includes:
determining a type of a requested video according to the identifier, carried in the playback request, of the requested new streaming media; and
if the type of the video requested by using the playback request is advertisement streaming media, forwarding the playback request to the advertisement server;
if the type of the video requested by using the playback request is streaming media, forwarding the playback request to the streaming server; or
if the type of the video requested by using the playback request is streaming media and advertisement streaming media, forwarding the playback request to an encoder, so that the encoder acquires the advertisement streaming media and the streaming media that are requested by using the playback request, and performs coding synthesis processing on the advertisement streaming media and the streaming media to obtain a synthesized video file.

An eighth aspect of the present invention provides a server, including a second processor, where
the second processor performs the following steps:
receiving an advertisement information request sent by a proxy server, and generating advertisement description information according to the advertisement information request; and
returning the advertisement description information to the proxy server.

With reference to the eighth aspect, in a first possible implementation manner, the generating, by the second processor, advertisement description information according to the advertisement information request includes:
searching, according to the advertisement information request, a pre-configured advertisement streaming media library for advertisement streaming media corresponding to the advertisement information request; and
generating advertisement description information according to the corresponding advertisement streaming media.

With reference to the eighth aspect or the first possible implementation manner of the eighth aspect, in a second possible implementation manner, the second processor further performs the following steps:
when the advertisement server receives a playback request sent by the proxy server, acquiring, according to the playback request, advertisement streaming media corresponding to the playback request; and
returning, by the advertisement server, the advertisement streaming media to the proxy server.

With reference to the eighth aspect or the first possible implementation manner of the eighth aspect, in a third possible implementation manner, the second processor further performs the following steps:
when the advertisement server receives a playback request sent by a terminal, acquiring, according to the playback request, advertisement streaming media corresponding to the playback request; and
returning the advertisement streaming media to the terminal.

As can be seen from the above, in some feasible implementation manners of the present invention, the present invention adds a proxy server node in an existing HTTP processing architecture, where the proxy server node acquires control information and a first attribute file of requested streaming media according to a streaming media request of a terminal, and modifies the first attribute file according to the control information to generate a second attribute file of new streaming media, so that the terminal receiving the second attribute file can separately request, under the control of the proxy server, associated streaming media from a streaming server and an advertisement server. In this way, advertisement streaming media is inserted when the terminal plays the streaming media, thereby effectively improving economic benefits of an HTTP service; moreover, the proxy server controllably pushes, according to the control information, an advertisement to the streaming media requested by the terminal, which can ensure that a user smoothly browses streaming media, and provide a user-friendly advertisement service for the user.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of an embodiment of a streaming media processing method according to the present invention;
FIG. 2 is a schematic structural diagram of an MPD file according to the present invention;
FIG. 3 is a schematic structural diagram of an MPD file in which an advertisement is serially inserted according to the present invention;
FIG. 4 is a flowchart of another embodiment of a streaming media processing method according to the present invention;
FIG. 5 is a schematic diagram of a timeline corresponding to a streaming media period according to the present invention;
FIG. 6 is a schematic structural diagram of an MPD file in which an advertisement is inserted in parallel according to the present invention;
FIG. 7 is a flowchart of still another embodiment of a streaming media processing method according to the present invention;
FIG. 8 is a flowchart of still another embodiment of a streaming media processing method according to the present invention;
FIG. 9 is a flowchart of still another embodiment of a streaming media processing method according to the present invention;
FIG. 10 is a flowchart of still another embodiment of a streaming media processing method according to the present invention;
FIG. 11 is a schematic structural diagram of an embodiment of a proxy server according to the present invention;
FIG. 12 is a schematic structural diagram of another embodiment of a proxy server according to the present invention;
FIG. 13 is a schematic structural diagram of an embodiment of an advertisement server according to the present invention;
FIG. 14 is a schematic structural diagram of another embodiment of an advertisement server according to the present invention;
FIG. 15 is a schematic structural diagram of still another embodiment of an advertisement server according to the present invention;
FIG. 16 is a schematic structural diagram of a streaming media processing system according to the present invention;
FIG. 17 is a schematic structural diagram of an embodiment of a proxy server according to the present invention; and
FIG. 18 is a schematic structural diagram of another embodiment of an advertisement server according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In the embodiments of the present invention, when streaming media transmission technologies are used to transmit streaming media, the HTTP (Hyper Text Transfer Protocol, Hyper Text Transfer Protocol) protocol is preferably used to transmit the steaming media.

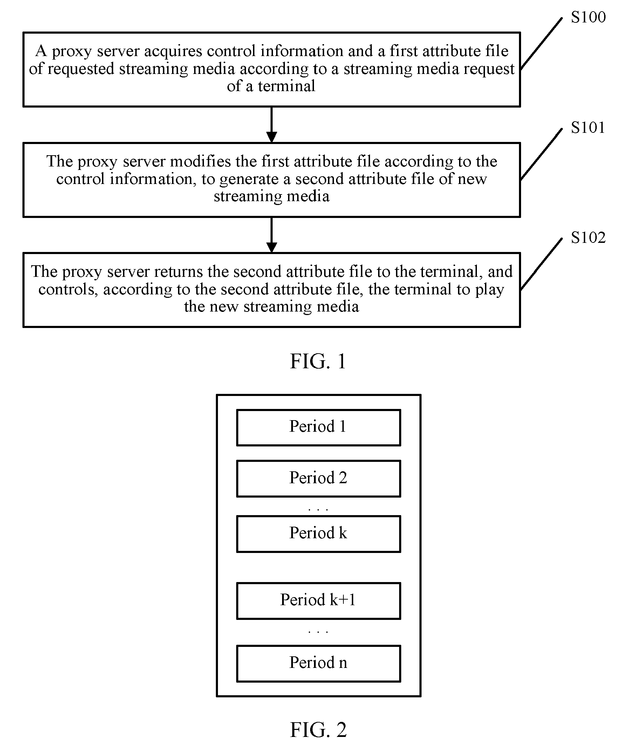

Refer to FIG. 1, which is a flowchart of a first embodiment of a streaming media processing method according to the present invention, where the streaming media is transmitted between a streaming server, an advertisement server, a proxy server, and a terminal by using an HTTP stream. The following describes a streaming media processing method from the side of a proxy server, and as shown in FIG. 1, the streaming media processing method described in this embodiment includes the following steps:
S100. A proxy server acquires control information and a first attribute file of requested streaming media according to a streaming media request of a terminal.

In a specific embodiment, the proxy server receives the streaming media request sent by the terminal, and forwards the received streaming media request to a streaming server. Specifically, the streaming media request carries user information, where the user information may include a user type, a user location, a type of a video watched by the user, a video attribute, and the like. In an actual application, the user information may be described in an xml form in the streaming media request, but is not limited to the xml form.

In some embodiments of the present invention, the proxy server may read pre-configured control information of the requested streaming media from a storage, or the proxy server receives the control information, sent by an operator or another device, of the requested streaming media. The control information may include such control information as controlling a type of an inserted video (the type of the inserted video described in this embodiment is an advertisement type), controlling an advertisement insertion position, and controlling advertisement insertion duration. The proxy server inserts, according to the control information, an advertisement into the streaming media requested by the terminal, and controls a type, a position, duration, and the like of the inserted advertisement, so that the operator can control, by using the control information, the terminal to insert an advertisement during playback of the streaming media, thereby providing a value-added service for a streaming service; the operator may further push different advertisement services to different terminal users by using the control information, and insert a more accurate and better targeted advertisement, thereby achieving an objective of pushing an advertisement in a personalized manner and effectively improving advertising efficiency. Certainly, the control information may also be controlling random insertion of an advertisement into the requested streaming media. Further, the proxy server may further insert, by using the control information, a trailer of a program, one of story branches of a program, or any video combination into the streaming media requested by the terminal.

In some embodiments of the present invention, the proxy server receives the first attribute file of the requested streaming media, where the first attribute file is returned by the streaming server in response to the streaming media request sent by the proxy server, and the first attribute file may be a first attribute file of streaming media such as a program, a film, or a match. The first attribute file is an MPD file of the streaming media. Referring to FIG. 2, FIG. 2 is a schematic structural diagram of an MPD file. Because streaming media is formed by one streaming media playback period or more consecutive streaming media playback periods, the MPD file also describes a series of time-based playback periods, where these playback periods form the MPD file. One playback period generally represents one streaming media playback period, and video quality information, user information, terminal information, a streaming media link URL (Uniform Resource Locator, uniform resource locator), and the like that are related to the streaming media in this playback period are described in this playback period. The MPD file provides enough description information required by the player terminal to play the streaming media, so that the terminal can request streaming media segments from the streaming server according to the MPD file, to acquire a streaming service. The streaming server searches, according to the streaming media request, a pre-configured media library for the streaming media corresponding to the streaming media request, and generates the MPD file according to the corresponding streaming media. Specifically, if the streaming media requested by the terminal is updated, the streaming server updates the pre-configured streaming media library. The streaming server acquires updated content from a streaming media source terminal, and performs coding and decoding processing on the updated content to obtain updated streaming media. The terminal may acquire the updated streaming media by requesting to acquire an updated MPD file.

S101. The proxy server modifies the first attribute file according to the control information to generate a second attribute file of new streaming media.

In a specific embodiment, the proxy server determines, according to the control information and the streaming media requested by the terminal, whether advertisement streaming media needs to be inserted into the streaming media requested by the terminal. For example, if the control information controls that an advertisement not be pushed to news-type streaming media, when the streaming media requested by the terminal is not news-type streaming media, the proxy server performs an operation of inserting an advertisement into the streaming media requested by the terminal.

Further, that the proxy server determines, according to the control information, whether advertisement streaming media needs to be inserted into the streaming media requested by the terminal further includes that: the control information controls the proxy server to interact with a PCRF (Policy and Charging Rules Function, policy and charging rules function) or an eNB (evolved NodeB, evolved NodeB) to acquire network status information, where the network status information includes a size of data transmission bandwidth of the proxy server. The proxy server determines, according to the size of data transmission bandwidth, whether the size of data transmission bandwidth is greater than or equal to a preset threshold, where the preset threshold may be 50 kbps, 100 kbps, 150 kbps, or the like. When the size of data transmission bandwidth is less than the preset threshold, the control information controls the proxy server not to perform advertisement insertion, so as to ensure that a user smoothly browses the streaming media, and provide a user-friendly advertisement service for the user.

When the proxy server performs an operation of inserting an advertisement into the streaming media requested by the terminal, the proxy server may first send an advertisement information request to an advertisement server providing advertisement streaming media, where the advertisement information request carries terminal information such as terminal type, screen size, and hardware capability; user information such as user subscription information, location, gender, and preference; an advertisement type such as advertisement for articles for daily use, sports advertisement, and clothing advertisement; and video quality information such as video code, code rate, resolution, and compression format, so that the advertisement server searches for corresponding advertisement description information according to the information. Further, the advertisement information request carries network status information, and the network status information includes the size of data transmission bandwidth, network congestion information, and the like. According to condition information carried in the advertisement information request, the advertisement server may screen, in an advertisement streaming media library according to the information carried in the advertisement information request, advertisement streaming media that meets the condition carried in the advertisement information request, and then the advertisement server generates advertisement description information according to the corresponding advertisement streaming media. When the advertisement server searches for the corresponding advertisement streaming media according to the network status information carried in the advertisement information request, an embodiment may be as follows: When the network status information carried in the advertisement information request indicates that a size of current data transmission bandwidth is 800 kbps, the advertisement server determines, according to the size of data transmission bandwidth, that a size of the advertisement streaming media to be inserted is not greater than 800 kbps; or when the network congestion information indicates that a current network congestion degree is 50%, the advertisement server determines, according to the congestion condition, that a congestion degree caused by a size of the advertisement streaming media to be inserted is less than 90% to 100%, which ensures that a user smoothly browses the streaming media and provides a user-friendly advertisement service for the user.

When the proxy server receives the advertisement description information that is returned according to the advertisement request by the advertisement server, the advertisement description information carries some information included in the first attribute file, for example, the terminal information such as terminal type, screen size, and hardware capability; the user information such as user subscription information, location, gender, and preference; the advertisement type such as advertisement for articles for daily use, sports advertisement, and clothing advertisement; and the video quality information such as video code, code rate, resolution, and compression format. The advertisement description information further carries an advertisement streaming media link URL.

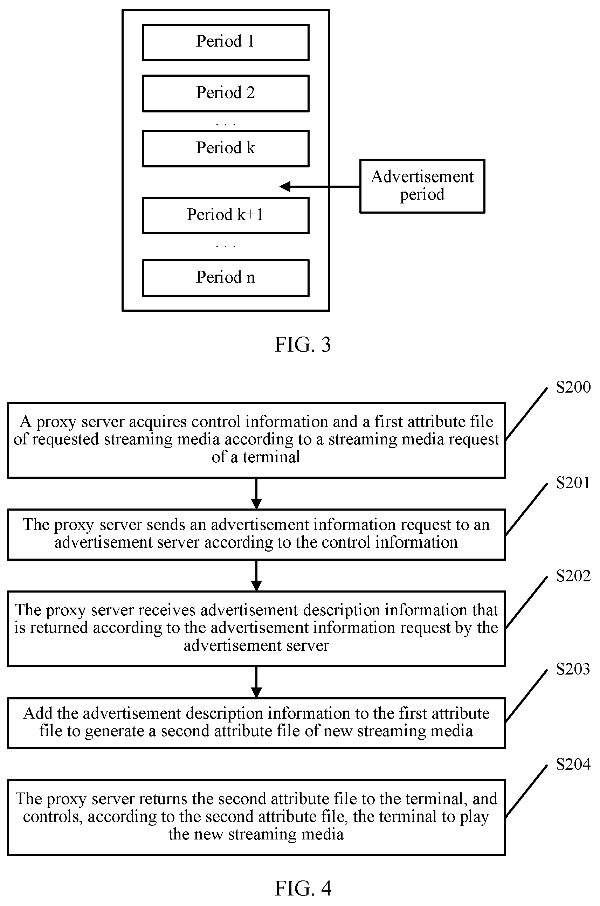

Further, after the proxy server obtains the advertisement description information, where the advertisement description information is also formed by a time-based playback period, as shown in FIG. 3, an advertisement playback period is added to the first attribute file to generate the second attribute file of the new streaming media, where the new streaming media includes the streaming media requested by the terminal and the inserted advertisement streaming media. The control information may control the second attribute file to set that the advertisement streaming media should not be skipped, or fast forwarded or rewound during playback.

Further, preferably, when the proxy server performs an operation of inserting an advertisement into the streaming media requested by the terminal, the proxy server may further directly acquire advertisement server information, where the advertisement server information includes a link address URL of the advertisement server. The proxy server may acquire the advertisement server information by using the pre-configured advertisement server information, and add the advertisement server information to the first attribute file to generate the second attribute file of the new streaming media; or the proxy server may add the advertisement server information to a media reply delivered to the terminal, for example, the proxy server sends "http:// Adserver.vast.tag" to the terminal, where the URL is a URL of the advertisement server, and the terminal may acquire an advertisement by using the VAST protocol specified by the IAB protocol.

The proxy server may add the advertisement server information to a header field in the media reply, for example, an extended HTTP header field. For example, a procedure for adding the URL of the advertisement server is as follows:
HTTP/1.1 200 OKProxy-Connection: Keep-AliveConnection: Keep-AliveContent-Length: 90710Via: 1.1 SZXISA04-INDate: Mon, 16 May 2013 03:23:53 GMTContent-Type: video/mp4ETag: "32a773167f06703"Server: Microsoft-IIS/7.5 IISMS/4.0Ad-Sever: http:// AdServer.vast.tag
Pragma: IISMS/4.0, IIS Media Services by MicrosoftCache-Control: max-age=7200 S103: The proxy server returns the second attribute file to the terminal, and controls, according to the second attribute file, the terminal to play the new streaming media.

In a specific embodiment, the second attribute file includes the MPD file and the advertisement description information of the streaming media. The proxy server controls the terminal to send a playback request according to the second attribute file, and play the new streaming media of the inserted advertisement streaming media.

Refer to FIG. 4, which is a flowchart of another embodiment of a streaming media processing method according to the present invention. As shown in FIG. 4, the streaming media processing method described in this embodiment includes the following steps:
S200. A proxy server acquires control information and a first attribute file of requested streaming media according to a streaming media request of a terminal.

In a specific embodiment, the proxy server receives the streaming media request sent by the terminal, and forwards the received streaming media request to a streaming server. Specifically, the streaming media request carries user information, where the user information may include a user type, a user location, a type of a video watched by the user, a video attribute, and the like. In an actual application, the user information may be described in an xml form in the streaming media request, but is not limited to the xml form.

In some embodiments of the present invention, the proxy server may read pre-configured control information of the requested streaming media from a storage, or the proxy server receives the control information, sent by an operator or another device, of the requested streaming media. The control information may include such control information as controlling a type of an inserted video (the type of the inserted video described in this embodiment is an advertisement type), controlling an advertisement insertion position, and controlling advertisement insertion duration. The proxy server inserts, according to the control information, an advertisement into the streaming media requested by the terminal, and controls a type, a position, duration, and the like of the inserted advertisement, so that the operator can control, by using the control information, the terminal to insert an advertisement during playback of the streaming media, thereby providing a value-added service for a streaming service; the operator may further push different advertisement services to different terminal users by using the control information, and insert a more accurate and better targeted advertisement, thereby achieving an objective of pushing an advertisement in a personalized manner and effectively improving advertising efficiency. Certainly, the control information may also be controlling random insertion of an advertisement into the requested streaming media. Further, the proxy server may further insert, by using the control information, a trailer of a program, one of story branches of a program, or any video combination into the streaming media requested by the terminal.

In some embodiments of the present invention, the proxy server receives the first attribute file of the requested streaming media, where the first attribute file is returned by the streaming server in response to the streaming media request sent by the proxy server, and the first attribute file may be a first attribute file of streaming media such as a program, a film, or a match. The first attribute file is an MPD file of the streaming media. Referring to FIG. 2, FIG. 2 is a schematic structural diagram of an MPD file. Because streaming media is formed by one streaming media playback period or more consecutive streaming media playback periods, the MPD file also describes a series of time-based playback periods, where these playback periods form the MPD file. One playback period generally represents one streaming media playback period, and video quality information, user information, terminal information, a streaming media link URL, and the like that are related to the streaming media in this playback period are described in this playback period. The MPD file provides enough description information required by the player terminal to play the streaming media, so that the terminal can request streaming media segments from the streaming server according to the MPD file, to acquire a streaming service. The streaming server searches, according to the streaming media request, a pre-configured media library for the streaming media corresponding to the streaming media request, and generates the MPD file according to the corresponding streaming media. Specifically, if the streaming media requested by the terminal is updated, the streaming server updates the pre-configured media library. The streaming server acquires updated content from a streaming media source terminal, and performs coding and decoding processing on the updated content to obtain updated streaming media. The terminal may acquire the updated streaming media by requesting to acquire an updated MPD file.

S201. The proxy server sends an advertisement information request to an advertisement server according to the control information.

In a specific embodiment, the proxy server determines, according to the control information and the streaming media requested by the terminal, whether advertisement streaming media needs to be inserted into the streaming media requested by the terminal. For example, if the control information controls that an advertisement not be pushed to news-type streaming media, when the streaming media requested by the terminal is not news-type streaming media, the proxy server performs an operation of inserting an advertisement into the streaming media requested by the terminal.

Further, that the proxy server determines, according to the control information, whether advertisement streaming media needs to be inserted into the streaming media requested by the terminal further includes that: the control information controls the proxy server to interact with a PCRF or an eNB to acquire network status information, where the network status information includes a size of data transmission bandwidth of the proxy server. The proxy server determines, according to the size of data transmission bandwidth, whether the size of data transmission bandwidth is greater than or equal to a preset threshold, where the preset threshold may be 50 kbps, 100 kbps, 150 kbps, or the like. When the size of data transmission bandwidth is less than the preset threshold, the control information controls the proxy server not to perform advertisement insertion, so as to ensure that a user smoothly browses the streaming media, and provide a user-friendly advertisement service for the user.

When the proxy server performs an operation of inserting an advertisement into the streaming media requested by the terminal, the proxy server may send an advertisement information request to an advertisement server providing advertisement streaming media, where the advertisement information request carries terminal information such as terminal type, screen size, and hardware capability; user information such as user subscription information, location, gender, and preference; an advertisement type such as advertisement for articles for daily use, sports advertisement, and clothing advertisement; and video quality information such as video code, code rate, resolution, and compression format, so that the advertisement server searches for corresponding advertisement description information according to the information. Further, the advertisement information request carries network status information, and the network status information includes the size of data transmission bandwidth, network congestion information, and the like. According to information carried in the advertisement information request, the advertisement server may screen, in an advertisement streaming media library according to the information carried in the advertisement information request, advertisement streaming media that meets a condition carried in the advertisement information request, and then the advertisement streaming media library generates advertisement description information according to the corresponding advertisement streaming media. When the advertisement server searches for the corresponding advertisement streaming media according to the network status information and the network congestion information that are carried in the advertisement information request, an embodiment may be as follows: When the network status information carried in the advertisement information request indicates that a size of current data transmission bandwidth is 800 kbps, the advertisement server determines, according to the size of data transmission bandwidth, that a size of the advertisement streaming media to be inserted is not greater than 800 kbps; or when the network congestion information indicates that a current network congestion degree is 50%, the advertisement server determines, according to the congestion condition, that a congestion degree caused by a size of the advertisement streaming media to be inserted is less than 90% to 100%, which ensures that a user smoothly browses the streaming media and provides a user-friendly advertisement service for the user.

Further, preferably, when the proxy server performs an operation of inserting an advertisement into the streaming media requested by the terminal, the proxy server may further directly acquire advertisement server information, where the advertisement server information includes a link address URL of the advertisement server. The proxy server may acquire the advertisement server information by using the pre-configured advertisement server information, and add the advertisement server information to the first attribute file to generate the second attribute file of the new streaming media; or the proxy server may add the advertisement server information to a media reply delivered to the terminal, for example, the proxy server sends "http:// Adserver.vast.tag" to the terminal, where the URL is a URL of the advertisement server, and the terminal may acquire an advertisement by using the VAST protocol specified by the IAB (Internet Architecture Board, Internet Architecture Board) protocol.

The proxy server may add the advertisement server information to a header field in the media reply, for example, an extended HTTP header field. For example, a procedure for adding the URL of the advertisement server is as follows:
HTTP/1.1 200 OKProxy-Connection: Keep-AliveConnection: Keep-AliveContent-Length: 90710Via: 1.1 SZXISA04-INDate: Mon, 16 May 2013 03:23:53 GMTContent-Type: video/mp4ETag: "32a773167f06703"Server: Microsoft-IIS/7.5 IISMS/4.0Ad-Sever: http:// AdServer.vast.tag
Pragma: IISMS/4.0, IIS Media Services by MicrosoftCache-Control: max-age=7200
S202. The proxy server receives advertisement description information that is returned according to the advertisement information request by the advertisement server.

In a specific embodiment, the advertisement description information is formed by a time-based playback period. When the proxy server receives the advertisement description information that is returned according to the advertisement request by the advertisement server, the advertisement description information carries some information included in the first attribute file, for example, the terminal information such as terminal type, screen size, and hardware capability, the user information such as user subscription information, location, gender, and preference; the advertisement type such as advertisement for articles for daily use, sports advertisement, and clothing advertisement; and the video quality information such as video code, code rate, resolution, and compression format, so that the advertisement server searches for corresponding advertisement description information according to the information. Further, the advertisement information request may further carry the network status information such as a network transmission rate and network congestion information. The advertisement description information further carries an advertisement link URL.

S203. Add the advertisement description information to the first attribute file to generate a second attribute file of new streaming media.

In a specific embodiment, while the advertisement description information is added to the first attribute file, it is determined, according to interstitial position control information of the control information, whether an insertion position of advertisement streaming media is located within a time period of a playback period corresponding to the requested streaming media. Because the MPD file describes a series of time-based playback periods and these playback periods form the MPD file, the advertisement description information also describes a time-based playback period and the advertisement playback period forms the advertisement description information, where the playback period describes media file information within the playback period, that is, terminal type, screen size, and hardware capability, and the like; user information such as user subscription information, location, gender, and preference; video quality information such as video code, code rate, resolution, and compression format; and the like within the playback period. Specifically, the determining, according to the interstitial position control information of the control information, whether an insertion position of the advertisement description information is located within the playback period corresponding to the requested streaming media is determining, according to the interstitial position control information of the control information, whether an insertion position of an advertisement playback period is located within the playback period corresponding to the requested streaming media.

When a determining result of determining whether the insertion position of the advertisement playback period is located within the playback period corresponding to the requested streaming media is no, the playback period corresponding to the streaming media is delayed according to the insertion position of the advertisement description information and the advertisement playback period, and the advertisement description information is added to the first attribute file to obtain the second attribute file, that is, the advertisement playback period is added to an interval between playback periods (as shown in FIG. 3) of the streaming media to obtain the second attribute file, where each playback period forming the second attribute file corresponds to one advertisement streaming media URL or one streaming media URL.

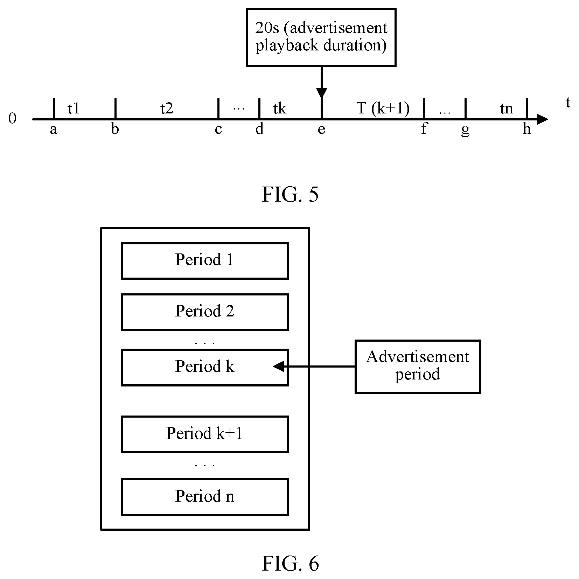

In an actual application, it is assumed that the first attribute file includes n streaming media periods (as shown in FIG. 3), and when the proxy server needs to insert, according to the control information, the advertisement description information into any interval position between streaming media playback periods of all streaming media or some streaming media for playback, a specific implementation manner for inserting the advertisement description information may be as follows: As shown in FIG. 5, FIG. 5 shows a timeline carried in the first attribute file, and the timeline includes playback time points and playback time periods of the streaming media corresponding to the n streaming media playback periods on the timeline, where a time length t1 indicates streaming media playback duration corresponding to streaming media playback period 1, and a time length t2 indicates streaming media playback duration corresponding to streaming media playback period 2. It is assumed that at a random position (the random position may be located between a streaming media playback period k and a streaming media playback period k+1, and there may be multiple random positions) between the streaming media playback periods, the proxy server inserts the advertisement playback period at this position (which may be a position indicated by an advertisement playback period arrow in FIG. 3), where an advertisement streaming media length corresponding to the advertisement playback period is 20s; then, 20s advertisement description information is inserted into a time interval between the playback period k and the streaming media playback period k+1 on the timeline carried in the first attribute file, time points corresponding to the streaming media playback period k+1 are modified, and the time points corresponding to the streaming media playback period k+1 are all delayed for 20s, that is, streaming media corresponding to all streaming media playback periods after the insertion position is played after a delay of 20s, where an advertisement streaming media URL and a streaming media URL are carried in each playback period. The terminal may acquire the new streaming media corresponding to the second attribute file according to the obtained second attribute file, where the advertisement and the streaming media requested by the terminal are played serially.

When a determining result of determining whether the insertion position of the advertisement description information is located within the playback period corresponding to the requested streaming media is yes, the advertisement description information is added to the first attribute file to obtain the second attribute file, that is, an advertisement playback period is added to the streaming media playback period so as to obtain the second attribute file (as shown in FIG. 6), where the inserted playback period includes the advertisement description information and the streaming media playback period, so that an advertisement streaming media URL and a streaming media URL are carried in the inserted playback period, URLs carried in other playback periods remain unchanged, and streaming media playback time corresponding to the playback period remains unchanged.

In an actual application, it is assumed that the first attribute file includes n streaming media playback periods, and when the proxy server needs to insert, according to the control information, the advertisement description information at positions in the k'th periods of all streaming media or some streaming media for playback, the proxy server adds the advertisement playback period into the k'th playback period, so that the k'th playback period includes streaming media description information and the advertisement description information to obtain the second attribute file, where an advertisement streaming media URL and a streaming media URL are carried in the k'th playback period. The terminal may acquire the new streaming media corresponding to the second attribute file according to the obtained second attribute file, where the advertisement and the streaming media requested by the terminal are played in parallel, for example, the terminal plays the requested streaming media and the advertisement in a picture-in-picture form.

S204. The proxy server returns the second attribute file to the terminal, and controls, according to the second attribute file, the terminal to play the new streaming media.

In a specific embodiment, the second attribute file includes the MPD file and the advertisement description information of the streaming media. The proxy server controls the terminal to send a playback request according to the second attribute file, and play the new streaming media of the inserted advertisement streaming media.

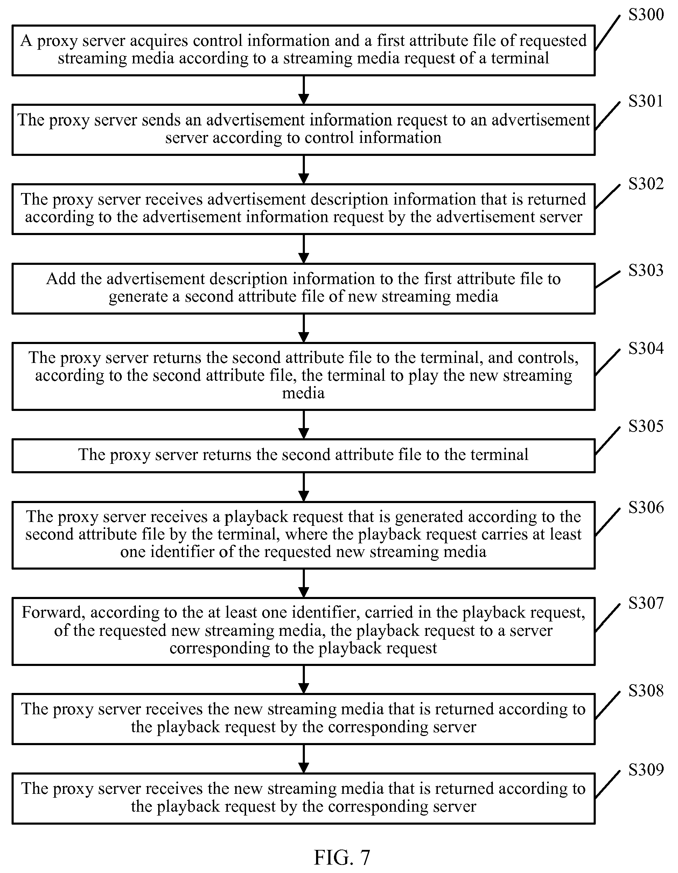

FIG. 7 is a flowchart of still another embodiment of a streaming media processing method according to the present invention. As shown in FIG. 7, the streaming media processing method described in this embodiment includes the following steps:
S300. A proxy server acquires control information and a first attribute file of requested streaming media according to a streaming media request of a terminal.

In a specific embodiment, the proxy server receives the streaming media request sent by the terminal, and forwards the received streaming media request to a streaming server. Specifically, the streaming media request carries user information, where the user information may include a user type, a user location, a type of a video watched by the user, a video attribute, and the like. In an actual application, the user information may be described in an xml form in the streaming media request, but is not limited to the xml form.

In some embodiments of the present invention, the proxy server may read pre-configured control information of the requested streaming media from a storage, or the proxy server receives the control information, sent by an operator or another device, of the requested streaming media. The control information may include such control information as controlling a type of an inserted video (the type of the inserted video described in this embodiment is an advertisement type), controlling an advertisement insertion position, and controlling advertisement insertion duration. The proxy server inserts, according to the control information, an advertisement into the streaming media requested by the terminal, and controls a type, a position, duration, and the like of the inserted advertisement, so that the operator can control, by using the control information, the terminal to insert an advertisement during playback of the streaming media, thereby providing a value-added service for a streaming service; the operator may further push different advertisement services to different terminal users by using the control information, and insert a more accurate and better targeted advertisement, thereby achieving an objective of pushing an advertisement in a personalized manner and effectively improving advertising efficiency. Certainly, the control information may also be controlling random insertion of an advertisement into the requested streaming media. Further, the proxy server may further insert, by using the control information, a trailer of a program, one of story branches of a program, or any video combination into the streaming media requested by the terminal.

In some embodiments of the present invention, the proxy server receives the first attribute file of the requested streaming media, where the first attribute file is returned by the streaming server in response to the streaming media request sent by the proxy server, and the first attribute file may be a first attribute file of streaming media such as a program, a film, or a match. The first attribute file is an MPD file of the streaming media. Referring to FIG. 2, FIG. 2 is a schematic structural diagram of an MPD file. Because streaming media is formed by one streaming media playback period or more consecutive streaming media playback periods, the MPD file also describes a series of time-based playback periods, where these playback periods form the MPD file. One playback period generally represents one streaming media playback period, and video quality information, user information, terminal information, a streaming media link URL, and the like that are related to the streaming media in this playback period are described in this playback period. The MPD file provides enough description information required by the player terminal to play the streaming media, so that the terminal can request streaming media segments from the streaming server according to the MPD file, to acquire a streaming service. The streaming server searches, according to the streaming media request, a pre-configured media library for the streaming media corresponding to the streaming media request, and generates the MPD file according to the corresponding streaming media. Specifically, if the streaming media requested by the terminal is updated, the streaming server updates the pre-configured media library. The streaming server acquires updated content from a streaming media source terminal, and performs coding and decoding processing on the updated content to obtain updated streaming media. The terminal may acquire the updated streaming media by requesting to acquire an updated MPD file.

S301. The proxy server sends an advertisement information request to an advertisement server according to the control information.

In a specific embodiment, the proxy server determines, according to the control information and the streaming media requested by the terminal, whether advertisement streaming media needs to be inserted into the streaming media requested by the terminal. For example, if the control information controls that an advertisement not be pushed to news-type streaming media, when the streaming media requested by the terminal is not news-type streaming media, the proxy server performs an operation of inserting an advertisement into the streaming media requested by the terminal.

Further, that the proxy server determines, according to the control information, whether advertisement streaming media needs to be inserted into the streaming media requested by the terminal further includes that: the control information controls the proxy server to acquire a size of data transmission bandwidth of the proxy server, the proxy server determines, according to the size of data transmission bandwidth, whether the size of data transmission bandwidth is greater than or equal to a preset threshold, where the preset threshold may be 50 KB, 100 KB, or 150 KB. When the size of data transmission bandwidth is less than the preset threshold, the control information controls the proxy server not to perform advertisement insertion, so as to ensure that a user smoothly browses the streaming media, and provide a user-friendly advertisement service for the user.

When the proxy server performs an operation of inserting an advertisement into the streaming media requested by the terminal, the proxy server sends an advertisement information request to an advertisement server providing advertisement streaming media, where the advertisement information request carries terminal information such as terminal type, screen size, and hardware capability; user information such as user subscription information, location, gender, and preference; an advertisement type such as advertisement for articles for daily use, sports advertisement, and clothing advertisement; and video quality information such as video code, code rate, resolution, and compression format, so that the advertisement server searches for corresponding advertisement description information according to the information. Further, the proxy server may further request network status information from a PCRF or an eNB, so that the advertisement information request carries the network status information such as a network transmission rate and network congestion information. According to information carried in the advertisement information request, the advertisement server may screen, in an advertisement streaming media library according to the information carried in the advertisement information request, advertisement streaming media that meets a condition carried in the advertisement information request, and then the advertisement streaming media library generates advertisement description information according to the corresponding advertisement streaming media. When the advertisement server searches for the corresponding advertisement streaming media according to the network status information and the network congestion information that are carried in the advertisement information request, an embodiment may be as follows: When the network status information carried in the advertisement information request indicates that a size of current data transmission rate is 800 kbps, the advertisement server determines, according to the data transmission rate, that a size of the advertisement streaming media to be inserted is not greater than 800 kbps; or when the network congestion information indicates that a current network congestion degree is 50%, the advertisement server determines, according to the congestion condition, that a congestion degree caused by a size of the advertisement streaming media to be inserted is less than 90% to 100%, which ensures that a user smoothly browses the streaming media and provides a user-friendly advertisement service for the user.

S302. The proxy server receives advertisement description information that is returned according to the advertisement information request by the advertisement server.

In a specific embodiment, the advertisement description information is formed by a time-based playback period. When the proxy server receives the advertisement description information that is returned according to the advertisement request by the advertisement server, the advertisement description information carries some information included in the first attribute file, for example, the terminal information such as terminal type, screen size, and hardware capability; the user information such as user subscription information, location, gender, and preference; the advertisement type such as advertisement for articles for daily use, sports advertisement, and clothing advertisement; and the video quality information such as video code, code rate, resolution, and compression format, so that the advertisement server searches for corresponding advertisement description information according to the information. Further, the advertisement information request may further carry the network status information such as a network transmission rate and network congestion information. The advertisement description information further carries an advertisement link URL.

S303. Add the advertisement description information to the first attribute file to generate the second attribute file of the new streaming media.

In a specific embodiment, while the advertisement description information is added to the first attribute file, it is determined, according to interstitial position control information of the control information, whether an insertion position of advertisement streaming media is located within a time period of a playback period corresponding to the requested streaming media. Because the MPD file describes a series of time-based playback periods and these playback periods form the MPD file, the advertisement description information also describes a time-based playback period and the advertisement playback period forms the advertisement description information, where the playback period describes media file information within the playback period, that is, terminal type, screen size, and hardware capability, and the like; user information such as user subscription information, location, gender, and preference; video quality information such as video code, code rate, resolution, and compression format; and the like within the playback period. Specifically, the determining, according to the interstitial position control information of the control information, whether an insertion position of the advertisement description information is located within the playback period corresponding to the requested streaming media is determining, according to the interstitial position control information of the control information, whether an insertion position of an advertisement playback period is located within the playback period corresponding to the requested streaming media.

When a determining result of determining whether the insertion position of the advertisement playback period is located within the playback period corresponding to the requested streaming media is no, the playback period corresponding to the streaming media is delayed according to the insertion position of the advertisement description information and the advertisement playback period, and the advertisement description information is added to the first attribute file to obtain the second attribute file, that is, the advertisement playback period is added to an interval between playback periods (as shown in FIG. 3) of the streaming media to obtain the second attribute file, where each playback period forming the second attribute file corresponds to one advertisement streaming media URL or one streaming media URL.

In an actual application, it is assumed that the first attribute file includes n streaming media periods (as shown in FIG. 3), and when the proxy server needs to insert, according to the control information, the advertisement description information into any interval position between streaming media playback periods of all streaming media or some streaming media for playback, a specific implementation manner for inserting the advertisement description information may be as follows: As shown in FIG. 5, FIG. 5 shows a timeline carried in the first attribute file, and the timeline includes playback time points and playback time periods of the streaming media corresponding to the n streaming media playback periods on the timeline, where a time length t1 indicates streaming media playback duration corresponding to streaming media playback period 1, and a time length t2 indicates streaming media playback duration corresponding to streaming media playback period 2. It is assumed that at a random position (the random position may be located between a streaming media playback period k and a streaming media playback period k+1, and there may be multiple random positions) between the streaming media playback periods, the proxy server inserts the advertisement playback period at this position (which may be a position indicated by an advertisement playback period arrow in FIG. 5), where an advertisement streaming media length corresponding to the advertisement playback period is 20s; then, 20s advertisement description information is inserted into a time interval between the playback period k and the streaming media playback period k+1 on the timeline carried in the first attribute file, time points corresponding to the streaming media playback period k+1 are modified, and the time points corresponding to the streaming media playback period k+1 are all delayed for 20s, that is, streaming media corresponding to all streaming media playback periods after the insertion position is played after a delay of 20s, where an advertisement streaming media URL and a streaming media URL are carried in each playback period. The terminal may acquire the new streaming media corresponding to the second attribute file according to the obtained second attribute file, where the advertisement and the streaming media requested by the terminal are played serially.

When a determining result of determining whether the insertion position of the advertisement description information is located within the playback period corresponding to the requested streaming media is yes, the advertisement description information is added to the first attribute file to obtain the second attribute file, that is, an advertisement playback period is added to the streaming media playback period so as to obtain the second attribute file (as shown in FIG. 6), where the inserted playback period includes the advertisement description information and the streaming media playback period, so that an advertisement streaming media URL and a streaming media URL are carried in the inserted playback period, URLs carried in other playback periods remain unchanged, and streaming media playback time corresponding to the playback period remains unchanged.

In an actual application, it is assumed that the first attribute file includes n streaming media playback periods, and when the proxy server needs to insert, according to the control information, the advertisement description information at positions in the k'th periods of all streaming media or some streaming media for playback, the proxy server adds the advertisement playback period into the k'th playback period, so that the k'th playback period includes streaming media description information and the advertisement description information to obtain the second attribute file, where an advertisement streaming media URL and a streaming media URL are carried in the k'th playback period. The terminal may acquire the new streaming media corresponding to the second attribute file according to the obtained second attribute file, where the advertisement and the streaming media requested by the terminal are played in parallel, for example, the terminal plays the requested streaming media and the advertisement in a picture-in-picture form.

S304: The proxy server returns the second attribute file to the terminal, and controls, according to the second attribute file, the terminal to play the new streaming media.

In a specific embodiment, the second attribute file includes the MPD file and the advertisement description information of the streaming media. The proxy server controls the terminal to send a playback request according to the second attribute file, and play the new streaming media of the inserted advertisement streaming media.

S305. The proxy server returns the second attribute file to the terminal.

S306. The proxy server receives a playback request that is generated according to the second attribute file by the terminal, where the playback request carries at least one identifier of the requested new streaming media.

In a specific embodiment, the playback request is a playback request that is generated by the terminal according to the second attribute file returned by the proxy server, where the playback request carries some key information in the second attribute file, including video quality information, user information, terminal information, and at least one streaming media URL. Each playback request is a playback request that is generated according to a playback period of the second attribute file, and the playback request is used to request streaming media from a server providing the streaming media.

Specifically, when an insertion position of the advertisement playback period of the second attribute file is not located within the playback period corresponding to the requested streaming media, a specific implementation manner of this embodiment is as follows: A playback request generated according to the playback period carries an identifier of requested new streaming media, and the identifier may be an advertisement streaming media URL or a streaming media URL, where the playback request corresponding to the inserted advertisement playback period carries the advertisement URL, and a playback request generated according to another streaming media playback period carries the streaming media URL.

Specifically, when an insertion position of the advertisement playback period of the second attribute file is located within the playback period corresponding to the requested new streaming media, a specific implementation manner of this embodiment is as follows: A playback request generated according to the playback period carries at least one identifier of the requested new streaming media. The playback request corresponding to the inserted playback period carries two identifiers of the requested new streaming media, where the identifier may be an advertisement streaming media URL or a streaming media URL; and the proxy server may determine, according to the carried URL type, a type of the new streaming media requested by using the playback request. A playback request corresponding to the streaming media period into which the advertisement playback period is inserted carries the advertisement streaming media URL and the streaming media URL; and a playback request corresponding to another streaming media period into which no advertisement playback period is inserted carries the streaming media URL.

Further, by using an application program of the terminal, the playback request may further be sent to a server corresponding to the playback request. For example, an advertisement plug-in is installed in intelligent software of the terminal. When the intelligent software of the terminal is started to trigger the advertisement plug-in to send the advertisement information request to the advertisement server, the advertisement plug-in generates a playback request according to the advertisement description information returned by the advertisement server, to request advertisement streaming media from the advertisement server, so that the advertisement plug-in of the terminal plays the advertisement streaming media. When the advertisement plug-in plays the advertisement streaming media, an advertisement can still be inserted into a video stream played by the intelligent software, and steps to be performed are same as the steps described above and are not described in detail herein.

S307. Forward, according to the at least one identifier, carried in the playback request, of the requested new streaming media, the playback request to a server corresponding to the playback request.

In a specific embodiment, the proxy server forwards the playback request to the corresponding server according to the identifier carried in the playback request, so that the corresponding server returns corresponding streaming media. For example, when the playback request carries the streaming media URL, the proxy server forwards the playback request to the streaming server; when the playback request carries the advertisement streaming media URL, the proxy server forwards the playback request to the advertisement server; or when the playback request carries the advertisement streaming media URL and the streaming media URL, the proxy server forwards the playback request to an encoding server, so that the encoding server requests, according to the advertisement streaming media URL in the playback request, an associated advertisement from an advertisement source; requests, according to the streaming media URL in the playback request, associated streaming media from a streaming media source; and performs coding synthesis on the advertisement and the streaming media to obtain a picture-in-picture video file. The encoding server may include the streaming server or the advertisement server.

S308. The proxy server receives the new streaming media that is returned according to the playback request by the corresponding server.

In a specific embodiment, the proxy server receives target advertisement streaming media that is screened by the advertisement server in a stored advertisement streaming media library according to the URL and the key information that are carried in the playback request, where the key information includes, for example, the video quality information, the user information, and other condition information; and returns the target advertisement streaming media.

Likewise, the proxy server receives target streaming media returned by the streaming server, where the target streaming media is target streaming media that is screened by the streaming server in a stored streaming media library according to the URL and the key information that are carried in the playback request, where the key information includes, for example, the video quality information, the user information, and other condition information.

Specifically, the proxy server further receives the picture-in-picture video file that is obtained by means of coding synthesis performed by an encoder. The playback request received by the encoder carries the advertisement streaming media URL and the streaming media URL; and the encoder separately sends the advertisement streaming media URL and the key information carried in the playback request to an advertisement source, and sends the streaming media URL and the key information carried in the playback request to a streaming media source; and acquires an advertisement file returned by the advertisement source and a streaming media file returned by the streaming media source. The encoder performs coding synthesis on the obtained advertisement file and streaming media file according to the key information carried in the playback request to obtain a picture-in-picture video file. The encoder may be the advertisement server or the streaming server.

S309. The proxy server pushes content of the streaming media to the terminal, so that the terminal plays the content of the streaming media.

In a specific embodiment, the proxy server pushes the new streaming media to the terminal by using the HTTP protocol, so that the terminal plays the new streaming media.

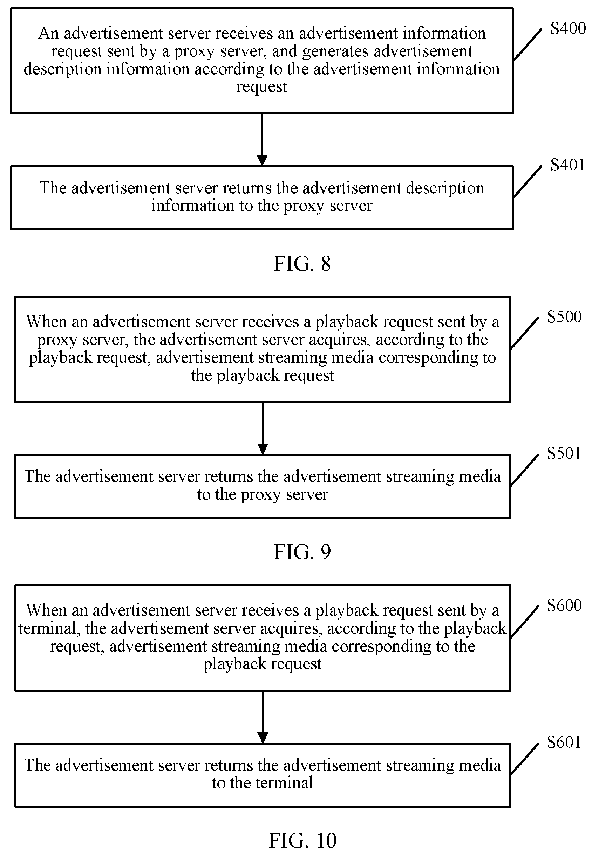

Refer to FIG. 8, which is a flowchart of an embodiment of a streaming media processing method according to the present invention. The following describes the method from the side of an advertisement server, and as shown in FIG. 8, the streaming media processing method described in this embodiment includes the following steps:
S400. An advertisement server receives an advertisement information request sent by a proxy server, and generates advertisement description information according to the advertisement information request.

In a specific embodiment, the advertisement information request may carry key information such as video quality information, user information, and terminal information. The advertisement server screens, in a stored advertisement streaming media library according to a screening condition carried in the advertisement request, advertisement streaming media corresponding to the advertisement information request, and generates the advertisement description information according to the screened advertisement streaming media.

If the advertisement streaming media corresponding to the request does not exist, the advertisement server may forward the advertisement request to an encoder; the encoder requests, from an advertisement source terminal according to the condition information carried in the advertisement information request, an advertisement streaming media source file corresponding to the request, and encodes the advertisement streaming media source file to generate advertisement streaming media; the encoder sends the advertisement streaming media to the advertisement server; and then the advertisement server generates the advertisement description information according to the received advertisement streaming media. Further, an encoder may be built in the advertisement server.

S401. The advertisement server returns the advertisement description information to the proxy server.

The advertisement server returns the generated advertisement description information to the proxy server according to a proxy server address carried in the received advertisement information request.

Refer to FIG. 9, which is a flowchart of still another embodiment of a streaming media processing method according to the present invention. As shown in FIG. 9, the streaming media processing method described in this embodiment includes the following steps:
S500. When an advertisement server receives a playback request sent by a proxy server, the advertisement server acquires, according to the playback request, advertisement streaming media corresponding to the playback request.

In a specific embodiment, the advertisement server screens, in a stored advertisement streaming media library according to key information carried in the playback request such as video quality information, user information, terminal information, an advertisement streaming media URL, and other condition information, advertisement streaming media that is requested by using the playback request.

S501. The advertisement server returns the advertisement streaming media to the proxy server.

In a specific embodiment, when a source address carried in the playback request is an IP address of a terminal, the advertisement server pushes the advertisement streaming media to the terminal; and the terminal receives the advertisement streaming media, and decodes and then plays the advertisement streaming media.

Refer to FIG. 10, which is a flowchart of still another embodiment of a streaming media processing method according to the present invention. As shown in FIG. 10, the streaming media processing method described in this embodiment includes the following steps:
S600. When an advertisement server receives a playback request sent by a terminal, the advertisement server acquires, according to the playback request, advertisement streaming media corresponding to the playback request.

In a specific embodiment, the playback request may be a playback request that is sent by an application program of the terminal.

In an actual application, when an advertisement plug-in installed in intelligent software of the terminal receives an intelligent software start signal, the start signal triggers the advertisement plug-in to send an advertisement information request to the advertisement server; the advertisement plug-in generates the playback request according to advertisement description information returned by the advertisement server, and requests the advertisement streaming media from the advertisement server. The advertisement server searches, according to the playback request, a stored advertisement streaming media library for the advertisement streaming media requested by using the playback request.

S601. The advertisement server returns the advertisement streaming media to the terminal.

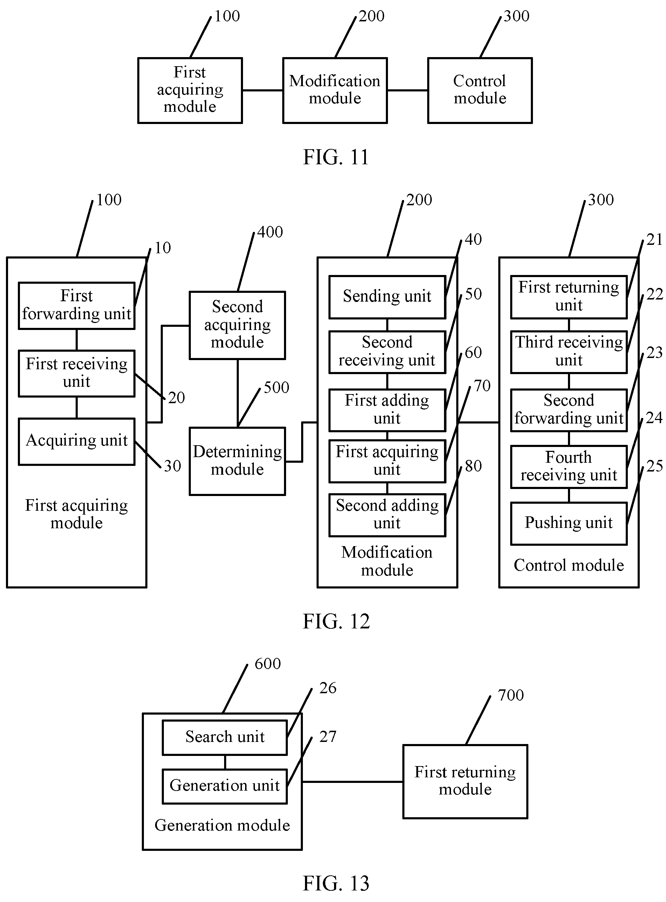

To facilitate implementation of the foregoing solutions in the embodiments of the present invention, related apparatuses for implementing the foregoing solutions are further provided in the following. Refer to FIG. 11, which is a schematic structural diagram of a proxy server according to an embodiment of the present invention. The proxy server may include: a first acquiring module 100, a modification module 200, and a control module 300.

The first acquiring module 100 is configured to acquire control information and a first attribute file of requested streaming media according to a streaming media request of a terminal.

In a specific embodiment, the proxy server receives the streaming media request sent by the terminal, and forwards the received streaming media request to a streaming server. Specifically, the streaming media request carries user information, where the user information may include a user type, a user location, a type of a video watched by the user, a video attribute, and the like. In an actual application, the user information may be described in an xml form in the streaming media request, but is not limited to the xml form.

In some embodiments of the present invention, the first acquiring module 100 may read pre-configured control information of the requested streaming media from a storage, or the first acquiring module 100 receives the control information, sent by an operator or another device, of the requested streaming media. The control information may include such control information as controlling a type of an inserted video (the type of the inserted video described in this embodiment is an advertisement type), controlling an advertisement insertion position, and controlling advertisement insertion duration. The proxy server inserts, according to the control information, an advertisement into the streaming media requested by the terminal, and controls a type, a position, duration, and the like of the inserted advertisement, so that the operator can control, by using the control information, the terminal to insert an advertisement during playback of the streaming media, thereby providing a value-added service for a streaming service; the operator may further push different advertisement services to different terminal users by using the control information, and insert a more accurate and better targeted advertisement, thereby achieving an objective of pushing an advertisement in a personalized manner and effectively improving advertising efficiency. Certainly, the control information may also be controlling random insertion of an advertisement into the requested streaming media. Further, the proxy server may further insert, by using the control information, a trailer of a program, one of story branches of a program, or any video combination into the streaming media requested by the terminal.

In some embodiments of the present invention, the first acquiring module 100 receives the first attribute file of the requested streaming media, where the first attribute file is returned by the streaming server in response to the streaming media request sent by the proxy server, and the first attribute file may be a first attribute file of streaming media such as a program, a film, or a match. The first attribute file is an MPD file of the streaming media. Referring to FIG. 2, FIG. 2 is a schematic structural diagram of an MPD file. Because streaming media is formed by one streaming media playback period or more consecutive streaming media playback periods, the MPD file also describes a series of time-based playback periods, where these playback periods form the MPD file. One playback period generally represents one streaming media playback period, and video quality information, user information, terminal information, a streaming media link URL, and the like that are related to the streaming media in this playback period are described in this playback period. The MPD file provides enough description information required by the player terminal to play the streaming media, so that the terminal can request streaming media segments from the streaming server according to the MPD file, to acquire a streaming service. The streaming server searches, according to the streaming media request, a pre-configured media library for the streaming media corresponding to the streaming media request, and generates the MPD file according to the corresponding streaming media. Specifically, if the streaming media requested by the terminal is updated, the streaming server updates the pre-configured streaming media library. The streaming server acquires updated content from a streaming media source terminal, and performs coding and decoding processing on the updated content to obtain updated streaming media. The terminal may acquire the updated streaming media by requesting to acquire an updated MPD file.

The modification module 200 is configured to modify the first attribute file according to the control information to generate a second attribute file of new streaming media.

In a specific embodiment, the modification module 200 determines, according to the control information and the streaming media requested by the terminal, whether advertisement streaming media needs to be inserted into the streaming media requested by the terminal. For example, if the control information controls that an advertisement not be pushed to news-type streaming media, when the streaming media requested by the terminal is not news-type streaming media, the proxy server performs an operation of inserting an advertisement into the streaming media requested by the terminal.

Further, that the modification module 200 determines, according to the control information, whether advertisement streaming media needs to be inserted into the streaming media requested by the terminal further includes that: the control information controls the proxy server to interact with a PCRF or an eNB to acquire network status information, where the network status information includes a size of data transmission bandwidth of the proxy server. The modification module 200 determines, according to the size of data transmission bandwidth, whether the size of data transmission bandwidth is greater than or equal to a preset threshold, where the preset threshold may be 50 kbps, 100 kbps, 150 kbps, or the like. When the size of data transmission bandwidth is less than the preset threshold, the control information controls the proxy server not to perform advertisement insertion, so as to ensure that a user smoothly browses the streaming media, and provide a user-friendly advertisement service for the user.

When the proxy server performs an operation of inserting an advertisement into the streaming media requested by the terminal, the modification module 200 may first send an advertisement information request to an advertisement server providing advertisement streaming media, where the advertisement information request carries terminal information such as terminal type, screen size, and hardware capability, user information such as user subscription information, location, gender, and preference; an advertisement type such as advertisement for articles for daily use, sports advertisement, and clothing advertisement; and video quality information such as video code, code rate, resolution, and compression format, so that the advertisement server searches for corresponding advertisement description information according to the information. Further, the advertisement information request carries network status information, and the network status information includes the size of data transmission bandwidth, network congestion information, and the like. According to information carried in the advertisement information request, the advertisement server may screen, in an advertisement streaming media library according to the information carried in the advertisement information request, advertisement streaming media that meets a condition carried in the advertisement information request, and then the advertisement streaming media library generates advertisement description information according to the corresponding advertisement streaming media. When the advertisement server searches for the corresponding advertisement streaming media according to the network status information carried in the advertisement information request, an embodiment may be as follows: When the network status information carried in the advertisement information request indicates that a size of current data transmission bandwidth is 800 kbps, the advertisement server determines, according to the size of data transmission bandwidth, that a size of the advertisement streaming media to be inserted is not greater than 800 kbps; or when the network congestion information indicates that a current network congestion degree is 50%, the advertisement server determines, according to the congestion condition, that a congestion degree caused by a size of the advertisement streaming media to be inserted is less than 90% to 100%, which ensures that a user smoothly browses the streaming media and provides a user-friendly advertisement service for the user.

When the modification module 200 receives the advertisement description information that is returned according to the advertisement request by the advertisement server, the advertisement description information carries some information included in the first attribute file, for example, the terminal information such as terminal type, screen size, and hardware capability, the user information such as user subscription information, location, gender, and preference; the advertisement type such as advertisement for articles for daily use, sports advertisement, and clothing advertisement; and the video quality information such as video code, code rate, resolution, and compression format. The advertisement description information further carries an advertisement streaming media link URL.

Further, after the modification module 200 obtains the advertisement description information, where the advertisement description information is also formed by a time-based playback period, as shown in FIG. 3, an advertisement playback period is added to the first attribute file to generate the second attribute file of the new streaming media, where the new streaming media includes the streaming media requested by the terminal and the inserted advertisement streaming media. The control information may control the second attribute file to set that the advertisement streaming media should not be skipped, or fast forwarded or rewound during playback.

Further, preferably, when the proxy server performs an operation of inserting an advertisement into the streaming media requested by the terminal, the modification module 200 may further directly acquire advertisement server information, where the advertisement server information includes a link address URL of the advertisement server. The modification module 200 may acquire the advertisement server information by using the pre-configured advertisement server information, and add the advertisement server information to the first attribute file to generate the second attribute file of the new streaming media; or the proxy server may add the advertisement server information to a media reply (for example, a reply to streaming media) delivered to the terminal, for example, the proxy server sends "http:// Adserver.vast.tag" to the terminal, where the URL is a URL of the advertisement server, and the terminal may acquire an advertisement by using the VAST protocol specified by the IAB protocol.

The proxy server may add the advertisement server information to a header field in the media reply, for example, an extended HTTP header field. For example, a procedure for adding the URL of the advertisement server is as follows:
HTTP/1.1 200 OKProxy-Connection: Keep-AliveConnection: Keep-AliveContent-Length: 90710Via: 1.1 SZXISA04-INDate: Mon, 16 May 2013 03:23:53 GMTContent-Type: video/mp4ETag: "32a773167f06703"Server: Microsoft-IIS/7.5 IISMS/4.0Ad-Sever: http:// AdServer.vast.tag
Pragma: IISMS/4.0, IIS Media Services by MicrosoftCache-Control: max-age=7200
The control module 300 is configured to return the second attribute file to the terminal, and control, according to the second attribute file, the terminal to play the new streaming media.

In a specific embodiment, the second attribute file includes the MPD file and the advertisement description information of the streaming media. The control module 300 controls the terminal to send a playback request according to the second attribute file, and play the new streaming media of the inserted advertisement streaming media.

Refer to FIG. 12, which is another schematic structural diagram of a proxy server according to the present invention. As shown in FIG. 12, the proxy server described in this embodiment includes: a first acquiring module 100, a modification module 200, and a control module 300.

The proxy server described in this embodiment further includes a second acquiring module 400, configured to acquire network status information according to the control information, where the network status information includes a size of data transmission bandwidth.

In a specific embodiment, the second acquiring module 400 controls, according to the control information, the proxy server to interact with a PCRF or an eNB to acquire network status information, where the network status information includes a size of data transmission bandwidth of the proxy server.

A determining module 500 is configured to determine, according to the size of data transmission bandwidth, whether the size of data transmission bandwidth is greater than or equal to a preset threshold; and when a determining result of the determining module is yes, notify, by the determining module, the modification module to modify the first attribute file according to the control information to generate the second attribute file of the new streaming media.

In a specific embodiment, the determining module 500 determines, according to the size of data transmission bandwidth, whether the size of data transmission bandwidth is greater than or equal to a preset threshold, where the preset threshold may be 50 kbps, 100 kbps, 150 kbps, or the like. When the determining result of the determining module 500 is that the size of data transmission bandwidth is less than the preset threshold, the determining module 500 controls, according to the control information, the proxy server not to perform advertisement insertion, so as to ensure that a user smoothly browses the streaming media, and provide a user-friendly advertisement service for the user. When the determining result of the determining module 500 is that the size of data transmission bandwidth is greater than the preset threshold, the determining module 500 notifies the modification module 200 to modify the first attribute file according to the control information to generate the second attribute file of the new streaming media.

Further, the first acquiring module 100 includes: A first forwarding unit 10 is configured to receive the streaming media request of the terminal, and forward the streaming media request to the streaming server.

A first receiving unit 20 is configured to receive the first attribute file that is returned according to the streaming media request by the streaming server.

In some embodiments of the present invention, the first receiving module 20 receives the first attribute file of the requested streaming media, where the first attribute file is returned by the streaming server in response to the streaming media request sent by the proxy server, and the first attribute file may be a first attribute file of streaming media such as a program, a film, or a match. The first attribute file is an MPD file of the streaming media. Referring to FIG. 2, FIG. 2 is a schematic structural diagram of an MPD file. Because streaming media is formed by one streaming media playback period or more consecutive streaming media playback periods, the MPD file also describes a series of time-based playback periods, where these playback periods form the MPD file. One playback period generally represents one streaming media playback period, and video quality information, user information, terminal information, a streaming media link URL, and the like that are related to the streaming media in this playback period are described in this playback period. The MPD file provides enough description information required by the player terminal to play the streaming media, so that the terminal can request streaming media segments from the streaming server according to the MPD file, to acquire a streaming service.

An acquiring unit 30 is configured to acquire the control information of the requested streaming media according to the received streaming media request of the terminal, wherein the control information includes interstitial position control information.

In some embodiments of the present invention, the acquiring unit 30 may read pre-configured control information of the requested streaming media from a storage, or the acquiring unit 30 receives the control information, sent by an operator or another device, of the requested streaming media. The control information may include such control information as controlling a type of an inserted video (the type of the inserted video described in this embodiment is an advertisement type), controlling an advertisement insertion position, and controlling advertisement insertion duration. The proxy server inserts, according to the control information, an advertisement into the streaming media requested by the terminal, and controls a type, a position, duration, and the like of the inserted advertisement, so that the operator can control, by using the control information, the terminal to insert an advertisement during playback of the streaming media, thereby providing a value-added service for a streaming service; the operator may further push different advertisement services to different terminal users by using the control information, and insert a more accurate and better targeted advertisement, thereby achieving an objective of pushing an advertisement in a personalized manner and effectively improving advertising efficiency. Certainly, the control information may also be controlling random insertion of an advertisement into the requested streaming media. Further, the proxy server may further insert, by using the control information, a trailer of a program, one of story branches of a program, or any video combination into the streaming media requested by the terminal.

The modification module 200 further includes :.
A sending unit 40 is configured to send an advertisement information request to an advertisement server according to the control information.

When the proxy server performs an operation of inserting an advertisement into the streaming media requested by the terminal, the sending unit 40 may send an advertisement information request to an advertisement server providing advertisement streaming media, where the advertisement information request carries terminal information such as terminal type, screen size, and hardware capability; user information such as user subscription information, location, gender, and preference; an advertisement type such as advertisement for articles for daily use, sports advertisement, and clothing advertisement; and video quality information such as video code, code rate, resolution, and compression format, so that the advertisement server searches for corresponding advertisement description information according to the information. Further, the advertisement information request carries network status information, and the network status information includes the size of data transmission bandwidth, network congestion information, and the like.

A second receiving unit 50 is configured to receive advertisement description information that is returned according to the advertisement information request by the advertisement server.

In a specific embodiment, when the second receiving unit 50 receives the advertisement description information that is returned according to the advertisement request by the advertisement server, the advertisement description information carries some information included in the first attribute file, for example, the terminal information such as terminal type, screen size, and hardware capability; the user information such as user subscription information, location, gender, and preference; the advertisement type such as advertisement for articles for daily use, sports advertisement, and clothing advertisement; and the video quality information such as video code, code rate, resolution, and compression format. The advertisement description information further carries an advertisement streaming media link URL.

A first adding unit 60 is configured to add the advertisement description information to the first attribute file to generate the second attribute file of the new streaming media.

Further, after the second receiving unit 50 obtains the advertisement description information, where the advertisement description information is also formed by a time-based playback period, as shown in FIG. 3, the first adding unit 60 adds an advertisement playback period to the first attribute file to generate the second attribute file of the new streaming media, where the new streaming media includes the streaming media requested by the terminal and the inserted advertisement streaming media. The control information may control the second attribute file to set that the advertisement streaming media should not be skipped, or fast forwarded or rewound during playback.

Further, preferably, when the proxy server performs an operation of inserting an advertisement into the streaming media requested by the terminal, the first adding unit 60 may directly acquire advertisement server information, where the advertisement server information includes a link address URL of the advertisement server. The first adding unit 60 may acquire the advertisement server information by using the pre-configured advertisement server information, and add the advertisement server information to the first attribute file to generate the second attribute file of the new streaming media.

The first adding unit 60 includes :
A first determining subunit 11 is configured to determine, according to the interstitial position control information of the control information, whether an insertion position of the advertisement description information is located within a playback period corresponding to the requested streaming media.

In a specific embodiment, the first determining subunit 11 determines, according to the interstitial position control information of the control information, an insertion position of advertisement streaming media is located within a time period of a playback period corresponding to the requested streaming media. Because the MPD file describes a series of time-based playback periods and these playback periods form the MPD file, the advertisement description information also describes a time-based playback period and the advertisement playback period forms the advertisement description information, where the playback period describes media file information within the playback period, that is, terminal type, screen size, and hardware capability, and the like; user information such as user subscription information, location, gender, and preference; video quality information such as video code, code rate, resolution, and compression format; and the like within the playback period. Specifically, the determining, by the first determining subunit 11 according to the interstitial position control information of the control information, whether an insertion position of the advertisement description information is located within the playback period corresponding to the requested streaming media is determining, by the first determining subunit 11 according to the interstitial position control information of the control information, whether an insertion position of an advertisement playback period is located within the playback period corresponding to the requested streaming media.

A delay subunit 12 is configured to: if a determining result of the first determining unit is no, delay, according to the insertion position of the advertisement streaming media and a playback period corresponding to the advertisement streaming media, the playback period corresponding to the streaming media, and add the advertisement description information to the first attribute file to obtain the second attribute file.

When a determining result of determining, by the first determining subunit 11, whether the insertion position of the advertisement playback period is located within the playback period corresponding to the requested streaming media is no, the delay subunit 12 delays the playback period corresponding to the streaming media according to the insertion position of the advertisement description information and the advertisement playback period, and the delay subunit 12 adds the advertisement description information to the first attribute file to obtain the second attribute file, that is, adds the advertisement playback period to an interval between playback periods (as shown in FIG. 3) of the streaming media to obtain the second attribute file, where each playback period forming the second attribute file corresponds to one advertisement streaming media URL or one streaming media URL.

In an actual application, it is assumed that the first attribute file includes n streaming media periods (as shown in FIG. 3), and when the proxy server needs to insert, according to the control information, the advertisement description information into any interval position between streaming media playback periods of all streaming media or some streaming media for playback, a specific implementation manner for inserting the advertisement description information may be as follows: As shown in FIG. 5, FIG. 5 shows a timeline carried in the first attribute file, and the timeline includes playback time points and playback time periods of the streaming media corresponding to the n streaming media playback periods on the timeline, where a time length t1 indicates streaming media playback duration corresponding to streaming media playback period 1, and a time length t2 indicates streaming media playback duration corresponding to streaming media playback period 2. It is assumed that at a random position (the random position may be located between a streaming media playback period k and a streaming media playback period k+1, and there may be multiple random positions) between the streaming media playback periods, the proxy server inserts the advertisement playback period at this position (which may be a position indicated by an advertisement playback period arrow in FIG. 5), where an advertisement streaming media length corresponding to the advertisement playback period is 20s; then, 20s advertisement description information is inserted into a time interval between the playback period k and the streaming media playback period k+1 on the timeline carried in the first attribute file, time points corresponding to the streaming media playback period k+1 are modified, and the time points corresponding to the streaming media playback period k+1 are all delayed for 20s, that is, streaming media corresponding to all streaming media playback periods after the insertion position is played after a delay of 20s, where an advertisement streaming media URL and a streaming media URL are carried in each playback period. The terminal may acquire the new streaming media corresponding to the second attribute file according to the obtained second attribute file, where the advertisement and the streaming media requested by the terminal are played serially.

A first adding subunit 13 is configured to add the advertisement description information to the first attribute file to obtain the second attribute file.

When a determining result of determining, by the firs determining subunit 11, whether the insertion position of the advertisement description information is located within the playback period corresponding to the requested streaming media is yes, the first adding subunit 13 adds the advertisement description information to the first attribute file to obtain the second attribute file, that is, the first adding subunit 13 adds an advertisement playback period to the streaming media playback period so as to obtain the second attribute file (as shown in FIG. 5), where the inserted playback period includes the advertisement description information and the streaming media playback period, so that the inserted playback period carries the advertisement streaming media URL and the streaming media URL, URLs carried in other playback periods remain unchanged, and streaming media playback time corresponding to the playback period remains unchanged.

In an actual application, it is assumed that the first attribute file includes n streaming media playback periods, and when the proxy server needs to insert, according to the control information, the advertisement description information at positions in the k'th periods of all streaming media or some streaming media for playback, the proxy server adds the advertisement playback period into the k'th playback period, so that the k'th playback period includes streaming media description information and the advertisement description information to obtain the second attribute file, where an advertisement streaming media URL and a streaming media URL are carried in the k'th playback period. The terminal may acquire the new streaming media corresponding to the second attribute file according to the obtained second attribute file, where the advertisement and the streaming media requested by the terminal are played in parallel, for example, the terminal plays the requested streaming media and the advertisement in a picture-in-picture form.

The modification module 200 may further include:
A first acquiring unit 70 is configured to acquire advertisement server information according to the control information.

In a specific embodiment, when the proxy server performs an operation of inserting an advertisement into the streaming media requested by the terminal, the first acquiring unit 70 may directly acquire advertisement server information according to the control information, where the advertisement server information includes a link address URL of the advertisement server. The first acquiring unit 70 may acquire the advertisement server information by using the pre-configured advertisement server information.

A second adding unit 80 is configured to add the advertisement server information to the first attribute file to generate the second attribute file of the new streaming media.

In a specific embodiment, the second adding unit 80 adds the link address URL of the advertisement server to the first attribute file to generate the second attribute file of the new streaming media.

Further, the control module 300 includes :
A first returning unit 21 is configured to return the second attribute file to the terminal.

In a specific embodiment, the second attribute file includes the MPD file of streaming media and the advertisement description information.

A third receiving unit 22 is configured to receive a playback request that is generated according to the second attribute file by the terminal, where the playback request carries at least one identifier of the requested new streaming media.

In a specific embodiment, the playback request received by the third receiving unit 22 is a playback request that is generated by the terminal according to the second attribute file returned by the proxy server, where the playback request carries some key information in the second attribute file, including video quality information, user information, terminal information, and at least one streaming media URL. Each playback request is a playback request that is generated according to a playback period of the second attribute file, and the playback request is used to request streaming media from a server providing the streaming media.

Specifically, when an insertion position of the advertisement playback period of the second attribute file is not located within the playback period corresponding to the requested streaming media, a specific implementation manner of this embodiment is as follows: A playback request generated according to the playback period carries an identifier of requested new streaming media, and the identifier may be an advertisement streaming media URL or a streaming media URL, where the playback request corresponding to the inserted advertisement playback period carries the advertisement URL, and a playback request generated according to another streaming media playback period carries the streaming media URL.

Specifically, when an insertion position of the advertisement playback period of the second attribute file is located within the playback period corresponding to the requested new streaming media, a specific implementation manner of this embodiment is as follows: A playback request generated according to the playback period carries at least one identifier of the requested new streaming media. The playback request corresponding to the inserted playback period carries two identifiers of the requested new streaming media, where the identifier may be an advertisement streaming media URL or a streaming media URL; and the proxy server may determine, according to the carried URL type, a type of the new streaming media requested by using the playback request. A playback request corresponding to the streaming media period into which the advertisement playback period is inserted carries an advertisement streaming media URL and a streaming media URL; and a playback request corresponding to another streaming media period into which no advertisement playback period is inserted carries the streaming media URL.

Further, by using an application program of the terminal, the playback request may further be sent to a server corresponding to the playback request. For example, an advertisement plug-in is installed in intelligent software of the terminal. When the intelligent software of the terminal is started to trigger the advertisement plug-in to send the advertisement information request to the advertisement server, the advertisement plug-in generates a playback request according to the advertisement description information returned by the advertisement server, to request advertisement streaming media from the advertisement server, so that the advertisement plug-in of the terminal plays the advertisement streaming media. When the advertisement plug-in plays the advertisement streaming media, an advertisement can still be inserted into a video stream played by the intelligent software, and steps to be performed are same as the steps described above and are not described in detail herein.

A second forwarding unit 23 is configured to forward, according to the at least one identifier, carried in the playback request, of the requested new streaming media, the playback request to a server corresponding to the playback request.

In a specific embodiment, the second forwarding unit 23 forwards the playback request to the corresponding server according to the identifier carried in the playback request, so that the corresponding server returns corresponding streaming media. For example, when the playback request carries the streaming media URL, the second forwarding unit 23 forwards the playback request to the streaming server; when the playback request carries the advertisement streaming media URL, the second forwarding unit 23 forwards the playback request to the advertisement server; or when the playback request carries the advertisement streaming media URL and the streaming media URL, the second forwarding unit 23 forwards the playback request to an encoding server, so that the encoding server requests, according to the advertisement streaming media URL in the playback request, an associated advertisement from an advertisement source; requests, according to the streaming media URL in the playback request, associated streaming media from a streaming media source; and performs coding synthesis on the advertisement and the streaming media to obtain a picture-in-picture video file. The encoding server may include the streaming server or the advertisement server.

A fourth receiving unit 24 is configured to receive the new streaming media that is returned according to the playback request by the corresponding server.

In a specific embodiment, the fourth receiving unit 24 receives target advertisement streaming media that is screened by the advertisement server in a stored advertisement streaming media library according to the URL and the key information that are carried in the playback request, where the key information includes, for example, the video quality information, the user information, and other condition information; and returns the target advertisement streaming media.

Likewise, the fourth receiving unit 24 receives target streaming media returned by the streaming server, where the target streaming media is target streaming media that is screened by the streaming server in a stored streaming media library according to the URL and the key information that are carried in the playback request, where the key information includes, for example, the video quality information, the user information, and other condition information.

Specifically, the fourth receiving unit 24 further receives the picture-in-picture video file that is obtained by means of coding synthesis performed by an encoder. The playback request received by the encoder carries the advertisement streaming media URL and the streaming media URL; and the encoder separately sends the advertisement streaming media URL and the key information carried in the playback request to an advertisement source, and sends the streaming media URL and the key information carried in the playback request to a streaming media source; and acquires an advertisement file returned by the advertisement source and a streaming media file returned by the streaming media source. The encoder performs coding synthesis on the obtained advertisement file and streaming media file according to the key information carried in the playback request to obtain a picture-in-picture video file. The encoder may be the advertisement server or the streaming server.

A pushing unit 25 is configured to push the new streaming media to the terminal, so that the terminal plays the new streaming media.

In a specific embodiment, the pushing unit 25 pushes the new streaming media to the terminal by using the HTTP protocol, so that the terminal plays the new streaming media.

The second forwarding unit 23 further includes the following units.

A second determining subunit 14 is configured to determine a type of a requested video according to the identifier, carried in the playback request, of the requested new streaming media.

A determining rule of the second determining subunit 14 is as follows: if the type of the video requested by using the playback request is advertisement streaming media, the playback request is forwarded to the advertisement server; if the type of the video requested by using the playback request is streaming media, the playback request is forwarded to the streaming server; or if the type of the video requested by using the playback request is streaming media and advertisement streaming media, the playback request is forwarded to an encoder, so that the encoder acquires the advertisement streaming media and the streaming media that are requested by using the playback request, and performs coding synthesis processing on the advertisement streaming media and the streaming media to obtain a synthesized video file.

A first forwarding subunit 15 is configured to: when the second determining subunit determines that the type of the video requested by using the playback request is advertisement streaming media, forward the playback request to the advertisement server.

In a specific embodiment, when the playback request carries the advertisement streaming media URL, the first forwarding subunit 15 forwards the playback request to the advertisement server.

A second forwarding subunit 16 is configured to: when the second determining subunit determines that the type of the video requested by using the playback request is streaming media, forward the playback request to the streaming server.

In a specific embodiment, when the playback request carries the streaming media URL, the second forwarding subunit 16 forwards the playback request to the streaming server.

A third forwarding subunit 17 is configured to: if the type of the video requested by using the playback request is streaming media and advertisement streaming media, forward the playback request to an encoder, so that the encoder acquires the advertisement streaming media and the streaming media that are requested by using the playback request, and performs coding synthesis processing on the advertisement streaming media and the streaming media to obtain a synthesized video file.

In a specific embodiment, when the playback request carries the advertisement streaming media URL and the streaming media URL, the third forwarding subunit 17 forwards the playback request to an encoding server, so that the encoding server requests, according to the advertisement streaming media URL in the playback request, an associated advertisement from an advertisement source; requests, according to the streaming media URL in the playback request, associated streaming media from a streaming media source; and performs coding synthesis on the advertisement and the streaming media to obtain a picture-in-picture synthesized video file. The encoding server may include the streaming server or the advertisement server.

Referring to FIG. 13, FIG. 13 is a schematic structural diagram of an advertisement server according to an embodiment of the present invention. The advertisement server may include a generation module 600, configured to receive an advertisement information request sent by a proxy server, and generate advertisement information according to the advertisement information request.

In a specific embodiment, the advertisement information request may carry key information such as video quality information, user information, terminal information, and network status information. The generation module 600 screens, in an advertisement streaming media library according to the condition information carried in the advertisement information request, advertisement streaming media that meets a condition carried in the advertisement information request, and then the generation module 600 generates advertisement description information according to the screened advertisement streaming media. When the generation module 600 searches for the corresponding advertisement streaming media according to the network status information carried in the advertisement information request, an embodiment may be as follows: When the network status information carried in the advertisement information request indicates that a size of current data transmission bandwidth is 800 kbps, the advertisement server determines, according to the size of data transmission bandwidth, that a size of the advertisement streaming media to be inserted is not greater than 800 kbps; or when the network congestion information indicates that a current network congestion degree is 50%, the advertisement server determines, according to the congestion condition, that a congestion degree caused by a size of the advertisement streaming media to be inserted is less than 90% to 100%, which ensures that a user smoothly browses the streaming media and provides a user-friendly advertisement service for the user.

Further, if the advertisement streaming media corresponding to the request does not exist, the advertisement server may forward the advertisement request to an encoder; the encoder requests, from an advertisement source terminal according to the condition information carried in the advertisement information request, an advertisement streaming media source file corresponding to the request, and encodes the advertisement streaming media source file to generate advertisement streaming media; the encoder sends the advertisement streaming media to the advertisement server; and then the advertisement server generates the advertisement description information according to the received advertisement streaming media. An encoder may be built in the advertisement server.

A first returning module 700 is configured to return the advertisement description information to the proxy server.

The advertisement server returns the generated advertisement description information to the proxy server according to a proxy server address carried in the received advertisement information request.

The generation module 600 further includes :.

A search unit 26 is configured to search, according to the advertisement information request, a pre-configured advertisement streaming media library for advertisement streaming media corresponding to the advertisement information request.

In a specific embodiment, the advertisement information request may carry key information such as video quality information, user information, terminal information, and network status information. The search unit 26 screens and searches for, in an advertisement streaming media library according to a condition carried in the advertisement request, advertisement streaming media corresponding to the advertisement information request.

A generation unit 27 is configured to generate advertisement description information according to the corresponding advertisement streaming media.

In a specific embodiment, the generation unit 27 generates, according to the advertisement streaming media found by the search unit 26, the advertisement description information corresponding to the advertisement streaming media.

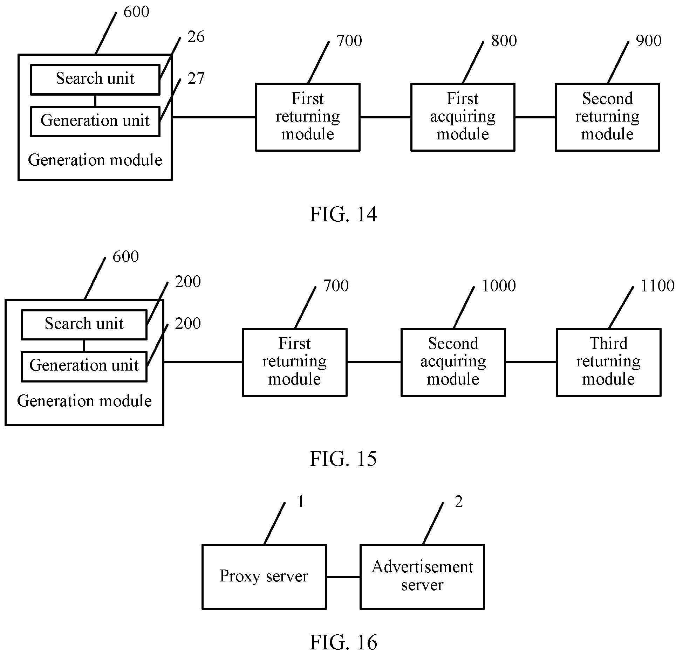

Refer to FIG. 14, which is a schematic structural diagram of another advertisement server according to an embodiment of the present invention. The advertisement server may include a generation module 600 and a first returning module 700.

The advertisement server may further include :
A first acquiring module 800 is configured to: when the advertisement server receives a playback request sent by the proxy server, acquire, according to the playback request, advertisement streaming media corresponding to the playback request.

In a specific embodiment, the first acquiring module 800 screens, in a stored advertisement streaming media library according to key information carried in the playback request such as video quality information, user information, terminal information, an advertisement streaming media URL, and other condition information, advertisement streaming media that is requested by using the playback request.

A second returning module 900 is configured to return the advertisement streaming media to the proxy server.

Refer to FIG. 15, which is a schematic structural diagram of another advertisement server according to an embodiment of the present invention. The advertisement server may include a generation module 600 and a first returning module 700.

The advertisement server may further include a second acquiring module 1000 and a third returning module 1100.

The second acquiring module 1000 is configured to: when the advertisement server receives a playback request sent by a terminal, acquire, according to the playback request, advertisement streaming media corresponding to the playback request.

In a specific embodiment, the playback request may be a playback request that is sent by an application program of the terminal.

In an actual application, when an advertisement plug-in installed in intelligent software of the terminal receives an intelligent software start signal, the start signal triggers the advertisement plug-in to send an advertisement information request to the advertisement server; the advertisement plug-in generates the playback request according to advertisement description information returned by the advertisement server, and requests the advertisement streaming media from the advertisement server. The second acquiring module 900 searches, according to the playback request, a stored advertisement streaming media library for the advertisement streaming media requested by using the playback request.

The third returning module 1100 is configured to return the advertisement streaming media to the terminal.

Refer to FIG. 16, which is a structural diagram of a streaming media control system according to an embodiment of the present invention. The streaming media control system may include the proxy server and the advertisement server that are described above.

The proxy server 1 is configured to acquire control information and a first attribute file of requested streaming media according to a streaming media request of a terminal; the proxy server 1 modifies the first attribute file according to the control information to generate a second attribute file of new streaming media, where the proxy server 1 may send an advertisement information request to the advertisement server 2 according to the control information, receive advertisement description information returned by the advertisement server, add the advertisement description information to the first attribute file, and generate the second attribute file of the new streaming media; the proxy server 1 returns the second attribute file to the terminal, and controls, according to the second attribute file, the terminal to play the new streaming media.

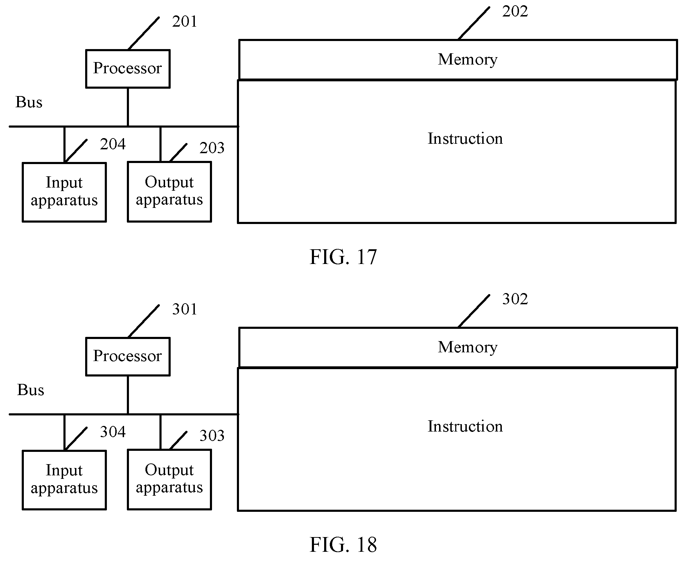

Referring to FIG. 17, the present invention further provides a proxy server, which may include:
a first processor 201 (there may be one or multiple first processors 201 in the proxy server, and an example in which there is one first processor is used in FIG. 7), a memory 202, an output apparatus 203, and an input apparatus 204; in this embodiment of the present invention, the first processor 201, the memory 202, the output apparatus 203, and the input apparatus 204 may be connected by using a bus or in another manner, where the memory 202 stores an application program executed by the processor.

The first processor 201 performs the following steps:
acquiring control information and a first attribute file of requested streaming media according to a streaming media request of a terminal; modifying the first attribute file according to the control information to generate a second attribute file of new streaming media; and returning the second attribute file to the terminal, and controlling, according to the second attribute file, the terminal to play the new streaming media.

In this embodiment of the present invention, the acquiring, by the first processor 201, control information and a first attribute file of requested streaming media according to a streaming media request of a terminal includes: forwarding, to a streaming server, the received streaming media request of the terminal; receiving the first attribute file that is returned according to the streaming media request by the streaming server; and acquiring the control information of the requested streaming media according to the received streaming media request of the terminal, where the control information includes interstitial position control information.

In this embodiment of the present invention, the first processor 201 further performs the following steps:
acquiring network status information according to the control information, where the network status information includes a size of data transmission bandwidth; determining, according to the size of data transmission bandwidth, whether the size of data transmission bandwidth is greater than or equal to a preset threshold; and when the data transmission bandwidth is greater than or equal to the preset threshold, performing the step of modifying, by the proxy server, the first attribute file according to the control information to generate a second attribute file of new streaming media.

In this embodiment of the present invention, the modifying, by the first processor 201, the first attribute file according to the control information to generate a second attribute file of new streaming media includes: sending an advertisement information request to an advertisement server according to the control information; receiving advertisement description information that is returned according to the advertisement information request by the advertisement server; and adding the advertisement description information to the first attribute file to generate the second attribute file of the new streaming media.

In this embodiment of the present invention, the adding, by the first processor 201, the advertisement description information to the first attribute file to generate the second attribute file includes: determining, according to the interstitial position control information of the control information, whether an insertion position of the advertisement description information is located within a playback period corresponding to the requested streaming media; and if a determining result is no, delaying, according to an insertion position of advertisement streaming media and a playback period corresponding to the advertisement streaming media, the playback period corresponding to the streaming media, and adding the advertisement description information to the first attribute file to obtain the second attribute file; or if a determining result is yes, adding the advertisement description information to the first attribute file to obtain the second attribute file.

In this embodiment of the present invention, the returning, by the first processor 201, the second attribute file to the terminal, and controlling, according to the second attribute file, the terminal to play the new streaming media includes: returning the second attribute file to the terminal; receiving a playback request that is generated according to the second attribute file by the terminal, where the playback request carries at least one identifier of the requested new streaming media; forwarding, according to the at least one identifier, carried in the playback request, of the requested new streaming media, the playback request to a server corresponding to the playback request; receiving the new streaming media that is returned according to the playback request by the corresponding server; and pushing the new streaming media to the terminal, so that the terminal plays the new streaming media.

In this embodiment of the present invention, that the playback request carries at least one identifier of the requested new streaming media includes that: the identifier, carried in the playback request, of the requested new streaming media includes an identifier of the requested advertisement streaming media and an identifier of the requested streaming media, where when the insertion position of the advertisement streaming media is not located within the playback period corresponding to the requested streaming media, the playback request corresponding to the advertisement streaming media carries the identifier of the advertisement streaming media.

In this embodiment of the present invention, the forwarding, according to the playback request, the playback request to a server corresponding to the playback request includes: determining a type of a requested video according to the identifier, carried in the playback request, of the requested new streaming media; and if the type of the video requested by using the playback request is advertisement streaming media, forwarding the playback request to the advertisement server; if the type of the video requested by using the playback request is streaming media, forwarding the playback request to the streaming server; or if the type of the video requested by using the playback request is streaming media and advertisement streaming media, forwarding the playback request to an encoder, so that the encoder acquires the advertisement streaming media and the streaming media that are requested by using the playback request, and performs coding synthesis processing on the advertisement streaming media and the streaming media to obtain a synthesized video file.

Referring to FIG. 18, the present invention further provides an advertisement server, which may include:
a first processor 301 (there may be one or multiple first processors 301 in the proxy server, and an example in which there is one first processor is used in FIG. 7), a memory 301, an output apparatus 302, and an input apparatus 303; in this embodiment of the present invention, the first processor 301, the memory 302, the output apparatus 303, and the input apparatus 304 may be connected by using a bus or in another manner, where the memory 302 stores an application program executed by the processor.

The first processor 201 performs the following steps:
receiving an advertisement information request sent by a proxy server, and generating advertisement description information according to the advertisement information request; and
returning the advertisement description information to the proxy server.

In a specific embodiment, the generating, by the second processor 301, advertisement description information according to the advertisement information request includes: searching, according to the advertisement information request, a pre-configured advertisement streaming media library for advertisement streaming media corresponding to the advertisement information request; and generating advertisement description information according to the corresponding advertisement streaming media.

In a specific embodiment, the second processor 301 further performs the following steps:
when the advertisement server receives a playback request sent by the proxy server, acquiring, according to the playback request, advertisement streaming media corresponding to the playback request; and returning, by the advertisement server, the advertisement streaming media to the proxy server.

In a specific embodiment, the second processor 301 further performs the following steps: when the advertisement server receives a playback request sent by a terminal, acquiring, according to the playback request, advertisement streaming media corresponding to the playback request; and returning the advertisement streaming media to the terminal.

As can be seen from the above, in some feasible implementation manners of the present invention, the present invention adds a proxy server node in an existing HTTP processing architecture, where the proxy server node acquires control information and a first attribute file of requested streaming media according to a streaming media request of a terminal, and modifies the first attribute file according to the control information to generate a second attribute file of new streaming media, so that the terminal receiving the second attribute file can separately request, under the control of the proxy server, associated streaming media from a streaming server and an advertisement server. In this way, advertisement streaming media is inserted when the terminal plays the streaming media, thereby effectively improving economic benefits of an HTTP service; moreover, the proxy server controllably pushes, according to the control information, an advertisement to the streaming media requested by the terminal, which can ensure that a user smoothly browses streaming media, and provide a user-friendly advertisement service for the user.

It should be noted that, for the methods according to the foregoing embodiments, to make the description simple, each method is described as a combination of a series of actions, but a person skilled in the art should know that the present invention is not limited by the described action sequence, because in accordance with the present invention, some steps can be performed in other sequences or synchronously. Besides, a person skilled in the art should also know that, all the embodiments described in the specification are exemplary embodiments, and the related actions and modules are not mandatory to the present invention.

In the foregoing embodiments, the description of each embodiment has respective focuses. For a part that is not described in detail in an embodiment, refer to related descriptions in other embodiments.

To sum up, the present invention adds a proxy server node in an existing HTTP processing architecture, where the proxy server node acquires control information and a first attribute file of requested streaming media according to a streaming media request of a terminal, and modifies the first attribute file according to the control information to generate a second attribute file of new streaming media, so that the terminal receiving the second attribute file can separately request, under the control of the proxy server, associated streaming media from a streaming server and an advertisement server. In this way, advertisement streaming media is inserted when the terminal plays the streaming media, thereby effectively improving economic benefits of an HTTP service; moreover, the proxy server controllably pushes, according to the control information, an advertisement to the streaming media requested by the terminal, which can ensure that a user smoothly browses streaming media, and provide a user-friendly advertisement service for the user.

A person of ordinary skill in the art may understand that all or some of the processes of the methods in the embodiments may be implemented by a computer program instructing related hardware. The program may be stored in a computer-readable storage medium. When the program is executed, the processes of the methods in the embodiments are performed. The storage medium may include: a magnetic disk, an optical disc, a read-only memory (Read-Only Memory, ROM), or a random access memory (Random Access Memory, RAM).

What is disclosed above is merely exemplary embodiments of the present invention, and certainly is not intended to limit the protection scope of the present invention. Therefore, equivalent variations made in accordance with the claims of the present invention shall fall within the scope of the present invention.

## Claims

1. A streaming media control method, wherein the method comprises:
acquiring, by a proxy server, control information and a first attribute file of requested streaming media according to a streaming media request of a terminal;
modifying, by the proxy server, the first attribute file according to the control information to generate a second attribute file of new streaming media; and
returning, by the proxy server, the second attribute file to the terminal, and controlling, according to the second attribute file, the terminal to play the new streaming media.

2. The method according to claim 1, wherein the acquiring, by a proxy server, control information and a first attribute file of requested streaming media according to a streaming media request of a terminal comprises:
forwarding, by the proxy server to the streaming server, the received streaming media request of the terminal;
receiving, by the proxy server, the first attribute file that is returned according to the streaming media request by the streaming server; and
acquiring, by the proxy server, the control information of the requested streaming media according to the received streaming media request of the terminal, wherein the control information comprises interstitial position control information.

3. The method according to claim 1 or 2, wherein after the acquiring, by a proxy server, control information and a first attribute file of requested streaming media according to a streaming media request of a terminal, and before the modifying, by the proxy server, the first attribute file according to the control information to generate a second attribute file of new streaming media, the method comprises:
acquiring, by the proxy server, network status information according to the control information, wherein the network status information comprises a size of data transmission bandwidth;
determining, by the proxy server according to the size of data transmission bandwidth, whether the size of data transmission bandwidth is greater than or equal to a preset threshold; and
when the data transmission bandwidth of the proxy server is greater than or equal to the preset threshold, performing the step of modifying, by the proxy server, the first attribute file according to the control information to generate a second attribute file of new streaming media.

4. The method according to any one of claims 1 to 3, wherein the modifying, by the proxy server, the first attribute file according to the control information to generate a second attribute file of new streaming media comprises:
sending, by the proxy server, an advertisement information request to an advertisement server according to the control information;
receiving, by the proxy server, advertisement description information that is returned according to the advertisement information request by the advertisement server; and
adding, by the proxy server, the advertisement description information to the first attribute file to generate the second attribute file of the new streaming media.

5. The method according to any one of claims 1 to 3, wherein the modifying, by the proxy server, the first attribute file according to the control information to generate a second attribute file of new streaming media comprises:
acquiring, by the proxy server, advertisement server information according to the control information; and
adding, by the proxy server, the advertisement server information to the first attribute file to generate the second attribute file of the new streaming media.

6. The method according to any one of claims 1 to 4, wherein the adding, by the proxy server, the advertisement description information to the first attribute file to generate the second attribute file comprises:
determining, by the proxy server according to the interstitial position control information of the control information, whether an insertion position of the advertisement description information is located within a playback period corresponding to the requested streaming media; and
if a determining result is no, delaying, by the proxy server according to an insertion position of advertisement streaming media and a playback period corresponding to the advertisement streaming media, the playback period corresponding to the streaming media, and adding the advertisement description information to the first attribute file to obtain the second attribute file; or
if a determining result is yes, adding, by the proxy server, the advertisement description information to the first attribute file to obtain the second attribute file.

7. The method according to any one of claims 1 to 6, wherein the returning, by the proxy server, the second attribute file to the terminal, and controlling, according to the second attribute file, the terminal to play the new streaming media comprises:
returning, by the proxy server, the second attribute file to the terminal;
receiving, by the proxy server, a playback request that is generated according to the second attribute file by the terminal, wherein the playback request carries at least one identifier of the requested new streaming media;
forwarding, by the proxy server according to the at least one identifier, carried in the playback request, of the requested new streaming media, the playback request to a server corresponding to the playback request;
receiving, by the proxy server, the new streaming media that is returned according to the playback request by the corresponding server; and
pushing, by the proxy server, the new streaming media to the terminal, so that the terminal plays the new streaming media.

8. The method according to claim 7, wherein that the playback request carries at least one identifier of the requested new streaming media comprises that:
the identifier, carried in the playback request, of the requested new streaming media comprises an identifier of the requested advertisement streaming media and an identifier of the requested streaming media, wherein
when the insertion position of the advertisement streaming media is not located within the playback period corresponding to the requested streaming media, the playback request corresponding to the advertisement streaming media carries the identifier of the advertisement streaming media; and
when the insertion position of the advertisement streaming media is located within the playback period corresponding to the requested streaming media, the playback request corresponding to the advertisement streaming media carries both the identifier of the requested advertisement streaming media and the identifier of the requested streaming media.

9. The method according to any one of claims 1 to 8, wherein the forwarding, by the proxy server according to the playback request, the playback request to a server corresponding to the playback request comprises:
determining a type of a requested video according to the identifier, carried in the playback request, of the requested new streaming media; and
if the type of the video requested by using the playback request is advertisement streaming media, forwarding, by the proxy server, the playback request to the advertisement server;
if the type of the video requested by using the playback request is streaming media, forwarding, by the proxy server, the playback request to the streaming server; or
if the type of the video requested by using the playback request is streaming media and advertisement streaming media, forwarding, by the proxy server, the playback request to an encoder, so that the encoder acquires the advertisement streaming media and the streaming media that are requested by using the playback request, and performs coding synthesis processing on the advertisement streaming media and the streaming media to obtain a synthesized video file.

10. A streaming media processing method, wherein the method comprises:
receiving, by an advertisement server, an advertisement information request sent by a proxy server, and generating advertisement description information according to the advertisement information request; and
returning, by the advertisement server, the advertisement description information to the proxy server.

11. The method according to claim 10, wherein the generating, by an advertisement server, advertisement description information according to the advertisement information request comprises:
searching, by the advertisement server according to the advertisement information request, a pre-configured advertisement streaming media library for advertisement streaming media corresponding to the advertisement information request; and
generating, by the advertisement server, advertisement description information according to the corresponding advertisement streaming media.

12. The method according to claim 10 or 11, wherein the module further comprises:
when the advertisement server receives a playback request sent by the proxy server, acquiring, by the advertisement server according to the playback request, advertisement streaming media corresponding to the playback request; and
returning, by the advertisement server, the advertisement streaming media to the proxy server.

13. The method according to claim 10 or 11, wherein the module further comprises:
when the advertisement server receives a playback request sent by a terminal, acquiring, by the advertisement server according to the playback request, advertisement streaming media corresponding to the playback request; and
returning, by the advertisement server, the advertisement streaming media to the terminal.

14. A proxy server, wherein the method comprises:
a first acquiring module, configured to acquire control information and a first attribute file of requested streaming media according to a streaming media request of a terminal;
a modification module, configured to modify the first attribute file according to the control information to generate a second attribute file of new streaming media; and
a control module, configured to return the second attribute file to the terminal, and control, according to the second attribute file, the terminal to play the new streaming media.

15. The proxy server according to claim 14, wherein the acquiring module comprises:
a first forwarding unit, configured to receive the streaming media request of the terminal, and forward the streaming media request to the streaming server;
a first receiving unit, configured to receive the first attribute file that is returned according to the streaming media request by the streaming server; and
an acquiring unit, configured to acquire the control information of the requested streaming media according to the received streaming media request of the terminal, wherein the control information comprises interstitial position control information.

16. The proxy server according to claim 14 or 15, wherein the proxy server further comprises:
a second acquiring module, configured to acquire network status information according to the control information, wherein the network status information comprises a size of data transmission bandwidth; and
a determining module, configured to determine, according to the size of data transmission bandwidth, whether the size of data transmission bandwidth is greater than or equal to a preset threshold; and when a determining result of the determining module is yes, notify, by the determining module, the modification module to modify the first attribute file according to the control information to generate the second attribute file of the new streaming media.

17. The proxy server according to any one of claims 14 to 16, wherein the modification module comprises:
a sending unit, configured to send an advertisement information request to an advertisement server according to the control information;
a second receiving unit, configured to receive advertisement description information that is returned according to the advertisement information request by the advertisement server; and
a first adding unit, configured to add the advertisement description information to the first attribute file to generate the second attribute file of the new streaming media.

18. The proxy server according to any one of claims 14 to 16, wherein the modification module further comprises:
a first acquiring unit, configured to acquire advertisement server information according to the control information; and
a second adding unit, configured to add the advertisement server information to the first attribute file to generate the second attribute file of the new streaming media.

19. The proxy server according to any one of claims 14 to 17, wherein the first adding unit comprises:
a first determining subunit, configured to determine, according to the interstitial position control information of the control information, whether an insertion position of the advertisement description information is located within a playback period corresponding to the requested streaming media;
a delay subunit, configured to: if a determining result of the first determining unit is no, delay, according to an insertion position of advertisement streaming media and a playback period corresponding to the advertisement streaming media, the playback period corresponding to the streaming media, and add the advertisement description information to the first attribute file to obtain the second attribute file; and
a first adding subunit, configured to add the advertisement description information to the first attribute file to obtain the second attribute file.

20. The proxy server according to any one of claims 14 to 16, wherein the control module comprises:
a first returning unit, configured to return the second attribute file to the terminal;
a third receiving unit, configured to receive a playback request that is generated according to the second attribute file by the terminal, wherein the playback request carries at least one identifier of the requested new streaming media;
a second forwarding unit, configured to forward, according to the at least one identifier, carried in the playback request, of the requested new streaming media, the playback request to a server corresponding to the playback request;
a fourth receiving unit, configured to receive the new streaming media that is returned according to the playback request by the corresponding server; and
a pushing unit, configured to push the new streaming media to the terminal, so that the terminal plays the new streaming media.

21. The proxy server according to claim 20, wherein that the playback request carries at least one identifier of the requested new streaming media comprises that:
the identifier, carried in the playback request, of the requested new streaming media comprises an identifier of the requested advertisement streaming media and an identifier of the requested streaming media, wherein
when the insertion position of the advertisement streaming media is not located within the playback period corresponding to the requested streaming media, the playback request corresponding to the advertisement streaming media carries the identifier of the advertisement streaming media; and
when the insertion position of the advertisement streaming media is located within the playback period corresponding to the requested streaming media, the playback request corresponding to the advertisement streaming media carries both the identifier of the requested advertisement streaming media and the identifier of the requested streaming media.

22. The proxy server according to any one of claims 14 to 21, wherein the second forwarding unit comprises:
a second determining subunit, configured to determine a type of a requested video according to the identifier, carried in the playback request, of the requested new streaming media;
a first forwarding subunit, configured to: when the second determining subunit determines that the type of the video requested by using the playback request is advertisement streaming media, forward the playback request to the advertisement server;
a second forwarding subunit, configured to: when the second determining subunit determines that the type of the video requested by using the playback request is streaming media, forward the playback request to the streaming server; and
a third forwarding subunit, configured to: if the type of the video requested by using the playback request is streaming media and advertisement streaming media, forward the playback request to an encoder, so that the encoder acquires the advertisement streaming media and the streaming media that are requested by using the playback request, and performs coding synthesis processing on the advertisement streaming media and the streaming media to obtain a synthesized video file.

23. An advertisement server, wherein the server comprises:
a generation module, configured to receive an advertisement information request sent by a proxy server, and generate advertisement description information according to the advertisement information request; and
a first returning module, configured to return the advertisement description information to the proxy server.

24. The advertisement server according to claim 23, wherein the generation module comprises:
a search unit, configured to search, according to the advertisement information request, a pre-configured advertisement streaming media library for advertisement streaming media corresponding to the advertisement information request; and
a generation unit, configured to generate advertisement description information according to the corresponding advertisement streaming media.

25. The advertisement server according to claim 23 or 24, wherein the advertisement server further comprises:
a first acquiring module, configured to: when the advertisement server receives a playback request sent by the proxy server, acquire, according to the playback request, advertisement streaming media corresponding to the playback request; and
a second returning module, configured to return the advertisement streaming media to the proxy server.

26. The advertisement server according to claim 23 or 24, wherein the advertisement server further comprises:
a second acquiring module, configured to: when the advertisement server receives a playback request sent by a terminal, acquire, according to the playback request, advertisement streaming media corresponding to the playback request; and
a third returning module, configured to return the advertisement streaming media to the terminal.

27. A system, comprising the proxy server according to any one of claims 14 to 22 and the advertisement server according to any one of claims 23 to 26.

28. A computer storage medium, wherein
the computer storage medium stores a program, and when the program is executed, the steps according to any one of claims 1 to 13 are performed.

29. A proxy server, comprising a first processor, wherein
the first processor performs the following steps:
acquiring control information and a first attribute file of requested streaming media according to a streaming media request of a terminal;
modifying the first attribute file according to the control information to generate a second attribute file of new streaming media; and
returning the second attribute file to the terminal, and controlling, according to the second attribute file, the terminal to play the new streaming media.

30. The proxy server according to claim 29, wherein the acquiring, by the first processor, control information and a first attribute file of requested streaming media according to a streaming media request of a terminal comprises:
forwarding, to the streaming server, the received streaming media request of the terminal;
receiving the first attribute file that is returned according to the streaming media request by the streaming server; and
acquiring the control information of the requested streaming media according to the received streaming media request of the terminal, wherein the control information comprises interstitial position control information.

31. The proxy server according to claim 29 or 30, wherein after the acquiring, by the first processor, control information and a first attribute file of requested streaming media according to a streaming media request of a terminal, and before the modifying, by the first processor, the first attribute file according to the control information to generate a second attribute file of new streaming media, the first processor further performs the following steps:
acquiring network status information according to the control information, wherein the network status information comprises a size of data transmission bandwidth;
determining, according to the size of data transmission bandwidth, whether the size of data transmission bandwidth is greater than or equal to a preset threshold; and
when the data transmission bandwidth is greater than or equal to the preset threshold, performing the step of modifying, by the proxy server, the first attribute file according to the control information to generate a second attribute file of new streaming media.

32. The proxy server according to any one of claims 29 to 31, wherein the modifying, by the first processor, the first attribute file according to the control information to generate a second attribute file of new streaming media comprises:
sending an advertisement information request to an advertisement server according to the control information;
receiving advertisement description information that is returned according to the advertisement information request by the advertisement server; and
adding the advertisement description information to the first attribute file to generate the second attribute file of the new streaming media.

33. The proxy server according to any one of claims 29 to 32, wherein the modifying, by the first processor, the first attribute file according to the control information to generate a second attribute file of new streaming media comprises:
acquiring advertisement server information according to the control information; and
adding the advertisement server information to the first attribute file to generate the second attribute file of the new streaming media.

34. The proxy server according to any one of claims 29 to 33, wherein the adding, by the proxy server, the advertisement description information to the first attribute file to generate the second attribute file comprises:
determining, according to the interstitial position control information of the control information, whether an insertion position of the advertisement description information is located within a playback period corresponding to the requested streaming media; and
if a determining result is no, delaying, according to an insertion position of advertisement streaming media and a playback period corresponding to the advertisement streaming media, the playback period corresponding to the streaming media, and adding the advertisement description information to the first attribute file to obtain the second attribute file; or
if a determining result is yes, adding the advertisement description information to the first attribute file to obtain the second attribute file.

35. The proxy server according to any one of claims 29 to 34, wherein the returning, by the first processor, the second attribute file to the terminal, and controlling, according to the second attribute file, the terminal to play the new streaming media comprises:
returning the second attribute file to the terminal;
receiving a playback request that is generated according to the second attribute file by the terminal, wherein the playback request carries at least one identifier of the requested new streaming media;
forwarding, according to the at least one identifier, carried in the playback request, of the requested new streaming media, the playback request to a server corresponding to the playback request;
receiving the new streaming media that is returned according to the playback request by the corresponding server; and
pushing the new streaming media to the terminal, so that the terminal plays the new streaming media.

36. The proxy server according to claim 35, wherein that the playback request carries at least one identifier of the requested new streaming media comprises that:
the identifier, carried in the playback request, of the requested new streaming media comprises an identifier of the requested advertisement streaming media and an identifier of the requested streaming media, wherein
when the insertion position of the advertisement streaming media is not located within the playback period corresponding to the requested streaming media, the playback request corresponding to the advertisement streaming media carries the identifier of the advertisement streaming media; and
when the insertion position of the advertisement streaming media is located within the playback period corresponding to the requested streaming media, the playback request corresponding to the advertisement streaming media carries both the identifier of the requested advertisement streaming media and the identifier of the requested streaming media.

37. The proxy server according to any one of claims 29 to 36, wherein the forwarding, according to the playback request, the playback request to a server corresponding to the playback request comprises:
determining a type of a requested video according to the identifier, carried in the playback request, of the requested new streaming media; and
if the type of the video requested by using the playback request is advertisement streaming media, forwarding the playback request to the advertisement server;
if the type of the video requested by using the playback request is streaming media, forwarding the playback request to the streaming server; or
if the type of the video requested by using the playback request is streaming media and advertisement streaming media, forwarding the playback request to an encoder, so that the encoder acquires the advertisement streaming media and the streaming media that are requested by using the playback request, and performs coding synthesis processing on the advertisement streaming media and the streaming media to obtain a synthesized video file.

38. An advertisement server, comprising a second processor, wherein
the second processor performs the following steps:
receiving an advertisement information request sent by a proxy server, and generating advertisement description information according to the advertisement information request; and
returning the advertisement description information to the proxy server.

39. The advertisement server according to claim 38, wherein the generating, by the second processor, advertisement description information according to the advertisement information request comprises:
searching, according to the advertisement information request, a pre-configured advertisement streaming media library for advertisement streaming media corresponding to the advertisement information request; and
generating advertisement description information according to the corresponding advertisement streaming media.

40. The advertisement server according to claim 38 or 39, wherein the second processor further performs the following steps:
when the advertisement server receives a playback request sent by the proxy server, acquiring, according to the playback request, advertisement streaming media corresponding to the playback request; and
returning, by the advertisement server, the advertisement streaming media to the proxy server.

41. The advertisement server according to claim 38 or 39, wherein the second processor further performs the following steps:
when the advertisement server receives a playback request sent by a terminal, acquiring, according to the playback request, advertisement streaming media corresponding to the playback request; and
returning the advertisement streaming media to the terminal.
